(19) Europäisches Patentamt
European Patent Office
Office européen des brevets

(11) **EP 2 632 608 B1**

## (12) EUROPEAN PATENT SPECIFICATION

(45) Date of publication and mention of the grant of the patent:
**18.01.2017 Bulletin 2017/03**

(21) Application number: **11703537.8**

(22) Date of filing: **27.01.2011**

(51) Int Cl.:
**B05D 1/30** *(2006.01)*      **B05D 7/00** *(2006.01)*
**C09J 7/02** *(2006.01)*      **B05D 1/42** *(2006.01)*

(86) International application number:
**PCT/US2011/022685**

(87) International publication number:
**WO 2011/094385 (04.08.2011 Gazette 2011/31)**

(54) **CONTINUOUS PROCESS FOR FORMING A MULTILAYER FILM AND MULTILAYER FILM PREPARED BY SUCH METHOD**

Kontinuierliches Verfahren zur Bildung einer mehrschichtigen Folie und mit dem Verfahren hergestellte mehrschichtige Folie

Procédé continu pour la formation d'un film multicouche et film multicouche préparé selon un tel procédé

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.01.2010 EP 10152185**

(43) Date of publication of application:
**04.09.2013 Bulletin 2013/36**

(73) Proprietor: **3M Innovative Properties Company St. Paul, MN 55133-3427 (US)**

(72) Inventors:
• **HITSCHMANN, Guido,**
  **41453 Neuss (DE)**
• **TRASER, Steffen,**
  **41453 Neuss (DE)**
• **FORSTER, Jan, D.,**
  **41453 Neuss (DE)**
• **KUEHNEWEG, Bernd**
  **41453 Neuss (DE)**

(74) Representative: **Gabriel, Kiroubagaranne et al 3M Belgium B.V.B.A./S.P.R.L.**
  **Hermeslaan 7**
  **1831 Diegem (BE)**

(56) References cited:
**EP-A1- 0 974 632      EP-A1- 1 538 262**
**DE-A1- 10 130 680      US-A- 4 143 190**
**US-A- 5 962 075      US-A1- 2001 052 385**

**Description**

**Disclosure**

The present disclosure relates to a continuous process of forming a multilayer film comprising at least two superimposed polymer layers. The present disclosure furthermore relates to a multilayer film obtainable by the process of the present disclosure which has advantageous optical properties and, in particular, a high transmission for visible light. The present disclosure furthermore relates to multilayer films wherein the top layer comprises a polyurethane polymer and the bottom layer comprises an (meth)acrylate based pressure-sensitive adhesive.

**Background**

The properties of multilayer films can be varied broadly by varying, for example, the composition of the layers, the sequence of the layers in the multilayer film or the respective thickness of the layers. Multilayer films can therefore be tailor-made for a broad variety of applications in different technical fields.

Multilayer films can be obtained, for example, by lamination of the corresponding single-layered films using conventional lamination equipment. The resulting multilayer films tend to delaminate, however, at the interfaces between the laminated layers when subjected to peel and/or shear forces, especially at elevated temperatures.

US 4,818,610 (Zimmerman et al.) discloses a pressure-sensitive adhesive tape comprising a plurality of superimposed layers wherein at least one outer layer is a pressure-sensitive adhesive layer. The adhesive tapes of US '610 are prepared by sequentially coating liquid compositions each comprising at least one photopolymerizable monomer, onto a substrate. A liner can be attached to the top layer and the plurality of superimposed layers is cured by subjecting it to irradiation in order to provide the adhesive tape. The method of making the adhesive tape is illustrated in the Fig. of US '610 which shows that the coating compositions form "rolling beads or banks" in front of the coating knives or the coating nip formed by a pair of rollers, respectively. The sequence of superimposed layers obtained by the method of US '610 may be distorted by physical mixing occurring between the layers.

Sequential coating methods are furthermore disclosed in JP 2001/187,362-A (Takashi et al.) and in JP 2003/001,648-A (Takashi et al.).

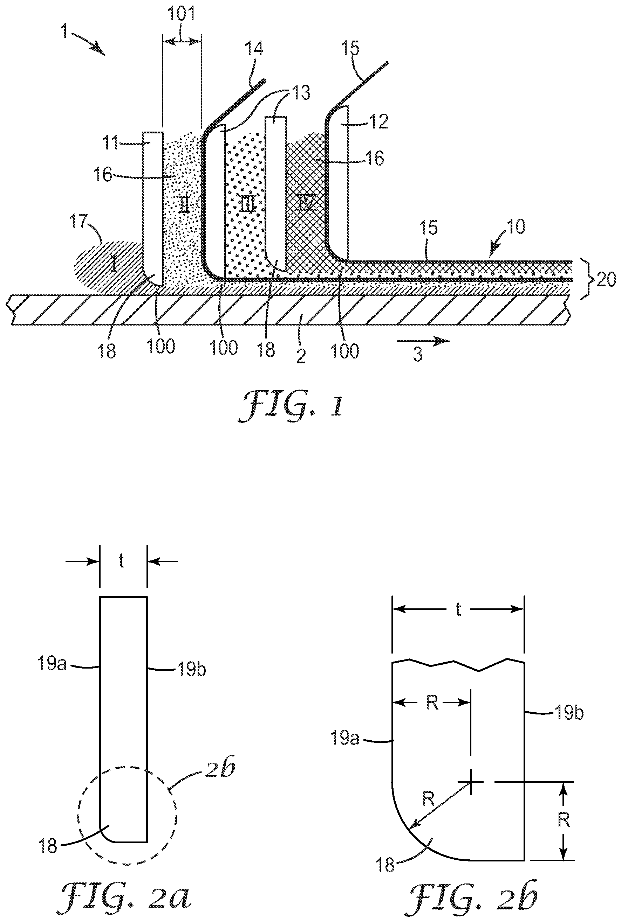

US 4,894,259 (Kuller) discloses a process of making a unified pressure-sensitive adhesive tape where a plurality of superimposed layers is concurrently coated onto a low-adhesion carrier by means of a co-extrusion die having multiple manifolds. The superimposed layers are subsequently subjected to irradiation in order to provide the adhesive tape. Fig. 1 of US '259 illustrates a so-called open-faced photopolymerization process where the topmost exposed layer is not covered with a UV-transparent release liner during the irradiation step so that the irradiation step needs to be conducted in an inert atmosphere. It is also disclosed in US '259 that the photopolymerizable coating is covered with a plastic film which is transparent to UV radiation so that the superimposed layers can be irradiated through such film in air.

The die coating method of US '259 is more complicated and expensive in comparison to the knife coating method of US 4,818,610. The coating compositions need to be pumped through the die. According to S.F. Kistler and P.M. Schweizer [ed.], Liquid Film Coating, London 1997, Chapmann & Hall, p.9, right column die coating is referred to as a pre-metered coating process "in which the amount of liquid applied to the web per unit area is predetermined by a fluid metering device upstream, such as a precision gear pump, and the remaining task of the coating device is to distribute that amount as uniformly as possible in both the down-web and cross-web direction". The pump provides an essentially constant volume flow rate which together with the downweb speed of the low adhesion carrier of US '259 mainly define the thickness of the coating layer. Pre-metered die-coating processes exhibit various short-comings. The pump introduces kinetic energy into the coated layers which may create a non-laminar flow pattern resulting in a high extent of physical mixing between the layers or thickness variations. Depending on the pump type used, the volume flow rate may exhibit oscillations or other variations which translate, for example, into thickness variations or other inhomogenities of the coating layers. The geometry of the manifolds of the die needs to be adjusted to the flow behaviour of the coating compositions so that a specific die may not be usable in a flexible way for various coating processes. The UV-transparent plastic film is attached in US '259 to the top layer subsequent to the die-coating step (i.e. outside of the die) which results, for example, either in the compression of the multilayer film or in the inclusion of air bubbles between the plastic film and the top layer due to tolerances that are present in any technical process. It is not possible to place the plastic film or any other film such as, for example, a release liner in a non-intrusive way on the multilayer stack of precursor layers so that such film would snugly fit to the exposed surface of the top layer of the multilayer stack. Compressing the multilayer stack introduces, for example, thickness variations or other inhomogenities into the multilayer stack. The liquid precursor may, for example, form a rolling bead at the position along the downstream direction where the liner compresses the stack which may introduce turbulences into the multilayer stack that finally leads to mixing of the layers. Leaving voids between the film and the exposed top surface allows oxygen to access the surface of the top layer which may inhibit curing of the precursor. It is also generally observed that in such case the surface of the top layer is less smooth, i.e. exhibits a higher surface roughness Ra in comparison to a situation where the film is compressing the multilayer stack. Also, the formation of air bubbles is observed in the top layer.

Pre-metered die-coating processes of multilayer films are also disclosed, for example, in EP 0,808,220 (Leonard), US 5,962,075 (Sartor et al.), US 5,728,430 (Sartor et al.), EP 1,538,262 (Morita et al.) and DE 101 30 680 as well as EP 0 974 632 A1. US 2004/0,022,954 discloses a pre-metered coating process wherein the coating layers are superimposed first before they are together transferred to the moving web substrate. A similar coating process is disclosed in US 4,143,190.

WO 01/89,673-A (Hools) discloses a process of forming multilayered porous membranes wherein two or more solutions of a polymer are co-casted onto a support. The superimposed layers are then immersed into a coagulation bath to effect phase separation followed by drying to form a porous membrane. Coagulation occurs from the liquid film surface that first contacts the coagulation bath with subsequent diffusion of the coagulant through the layers of the multilayered liquid sheet. The diffusion and coagulation process results in mixing at the interfaces between the superimposed layers.

## Summary

The present disclosure provides a cost-effective, stable continuous process of forming a multilayer film comprising at least two superimposed polymer layers which does not exhibit the shortcomings of the state-of-the-art processes or exhibits them to a lower extent only, respectively. The present disclosure also provides a method of forming a multilayer film which is versatile and flexible and allows for the easy manufacture of complex structures comprising at least two polymer layers. The present disclosure also provides a multilayer film optionally including a further layer which was initially included as a solid film into the curable precursor of the multilayer film. Additionally the present disclosure provides multilayer films with advantageous optical properties as evaluated, for example, by the extent of transmission of visible light through the multilayer film.

Other objects of the present disclosure will be apparent to the person skilled in the art from the detailed specification of the disclosure provided below.

The present disclosure relates to a continuous self-metered process of forming a multilayer film comprising at least two superimposed polymer layers comprising the steps of:

(i) providing a substrate;
(ii) providing two or more coating knives which are offset, independently from each other, from said substrate to form a gap normal to the surface of the substrate;
(iii) moving the substrate relative to the coating knives in downstream direction,
(iv) providing curable liquid precursors of the polymers to the upstream surfaces of the coating knives thereby coating the two or more precursors through the respective gaps as superimposed layers onto the substrate;
(v) optionally providing one or more solid films and applying these essentially simultaneously with the formation of the adjacent lower polymer layer, and
(vi) curing the precursor of the multilayer film thus obtained;

wherein a lower layer of a curable liquid precursor is covered by an adjacent upper layer of a curable liquid precursor or a solid film, respectively, essentially without exposing said lower layer of a curable liquid precursor.

The present disclosure also relates to a multilayer film which is obtainable by the above method wherein a release liner is attached in step (v) of said method to the exposed surface of the top layer of the precursor of the multilayer film essentially simultaneously with the formation of such top layer. These multilayer films preferably are light-transmissive and comprise at least two superimposed polymer layers each having a transmission of at least 80% relative to visible light whereby the light transmission of such multilayer film is higher than the transmission of a comparative multilayer film obtained by a method differing from the above method in that the release liner is attached to the exposed surface of the top layer surface at a position downstream to the formation of the top layer of the precursor of the multilayer film. The ratio of the transmission of said multilayer film of the disclosure over the transmission of comparative multilayer film preferably is at least 1.002.

The present disclosure furthermore relates to a light-transmissive multilayer film comprising at least two superimposed polymer layers wherein one of the outer layers comprises a polyurethane polymer obtainable from the polymerization of a liquid precursor comprising at least one ethylenically unsaturated urethane compound and wherein the opposite other outer layer comprises an adhesive, the multilayer film having a maximum wave-front aberration of a wavefront resulting from a planar wavefront of a wavelength of $\lambda = 635$ nm impinging normally on the outer layer opposite to the outer adhesive layer and transmitted through the multilayer film measured as the peak-to-valley value of the transmitted wavefront, of less than $6 \lambda$ (= 3,810 nm). The at least two superimposed polymer layers each preferably have a transmission of at least 80% relative to visible light. The adhesive is preferably a (meth)acrylate based pressure-sensitive adhesive.

The present disclosure preferably relates to an assembly comprising a light-transmissive multilayer film obtainable by the above method and a glass substrate wherein the multilayer film comprises at least two superimposed polymer layers each having a transmission of at least 80% relative to visible light, wherein one of the outer layers of the multilayer film is an adhesive layer through which the multilayer is attached to the glass substrate and wherein the refractive index of the outer adhesive layer is lower than the refractive index of the opposite outer layer of the multilayer film. In a preferred embodiment the difference between the refractive indices of the adhesive layer and the opposite outer layer is less than 0.030.

## Description Of The Figures

Fig. 1 is a schematic representation of a coating apparatus useful in the present disclosure.

Figs. 2a and 2b are schematic cross-sectional views of a coating knife which can be used in the present disclosure.

Fig. 3 is a schematic representation of the method of measuring the wave-front aberration of a wavefront resulting from a planar wavefront normally impinging on the top surface of a multilayer film and transmitted through a multilayer film.

Fig. 4 is a cross-sectional microphotograph of the multilayer film prepared according to Example 2 below.

Fig. 5 is a cross-sectional microphotograph of the multilayer film prepared according to Example 5 below.

Fig. 6 is a cross-sectional microphotograph of the multilayer film prepared according to Example 11 below.

Figs. 7a and 7b are cross-sectional microphotographs of the multilayer film prepared according to Example 12 below taken at different magnifications.

Fig. 8 is a cross-sectional microphotograph of the multilayer film prepared according to Example 13.

Figs. 9a - 9i represent Siemens Star test images for a glass plate reference, the multilayer film of Example 22, the films of Comparative Examples 1a - 1c, the multilayer films of Examples 23 and 24, and the films of Comparative Examples 2a and 2b.

Fig. 10 is a schematic representation of a coating apparatus used in Example 24.

## Detailed Description

In the continuous self-metered coating process of the present disclosure, two or more curable liquid precursors of polymeric materials are coated onto a substrate and cured to provide a multilayer film comprising at least two superimposed polymer layers.

The term superimposed as used above and below means that two or more of the layers of the liquid precursors of the polymers or of the polymer layers of the multilayer film, respectively, are arranged on top of each other. Superimposed liquid precursor layers may be arranged directly next to each other so that the upper surface of the lower layer is abutting the lower surface of the upper layer. In another arrangement superimposed liquid precursor layers are not abutting each other but are separated from each other by one or more liquid precursor layers and/or one or more solid films or webs.

The term adjacent as used above and below refers to two superimposed layers within the precursor multilayer film or the cured multilayer film which are arranged directly next to each other, i.e. which are abutting each other.

The terms top and bottom layers, respectively, are used above and below to denote the position of a liquid precursor layer relative to the surface of the substrate bearing the precursor layer in the process of forming a multilayer film. The precursor layer arranged next to the substrate surface is referred to as bottom layer whereas the precursor layer arranged most distantly from the substrate surface in a direction normal to the substrate surface is referred to as top layer. It should be noted that the terms top and bottom layer used above and below in conjunction with the description of the method of manufacturing the multilayer films do not have an unambiguous meaning in relation to the multilayer films as such. The term bottom layer is unambiguously defined in relation to the method of the present disclosure as the layer adjacent to the substrate of the coating apparatus. Likewise, the outer layer of the precursor of the multilayer film which is opposite to the bottom layer and which is applied last during the method is unambiguously referred to above and below as top layer. Contrary to this, when referring to the cured multilayer film as such, its two opposite outmost layers are termed above and below for clarity reasons as outer layers.

The terms superimposed and adjacent likewise apply to the cured polymer layers and the cured multilayer film, respectively.

The term precursor as used above and below denotes the material from which the polymers of the corresponding polymer layers of the multilayer film can be obtained by curing. The term precursor is also used to denote the stack of layers comprising at least two layers of liquid precursors from which the multilayer film of the present disclosure can be obtained by curing. Curing can be effected by curing with actinic radiation such as UV, $\gamma$ (gamma) or e-beam radiation or by thermal curing.

The process of the present disclosure employs a substrate onto which the two or more layers of the liquid precursors are coated, and two or more coating knives which are offset independently from each other from the surface of the substrate receiving the precursor of the multilayer film, to form gaps normal to the surface of the substrate.

The direction into which the substrate is moving is referred to above and below as downstream direction. The relative terms upstream and downstream describe the position along the extension of the substrate. A second coating knife which is arranged in a downstream position relative to a first coating knife is also referred to above and below in an abbreviatory manner as downstream coating knife relative to the first (upstream) coating knife.

The coating knives useful in the present disclosure each have an upstream side (or surface), a downstream side (or surface) and a bottom portion facing the surface of the substrate receiving the precursor of the multilayer film. The gap is measured as the minimum distance between the bottom portion of the coating knife and the exposed surface of the substrate. The gap can be essentially uniform in the transverse direction (i.e. in the direction normal to the downstream direction) or it may vary continuously or discontinuously in the transverse direction, respectively.

The cross-sectional profile of the bottom portion of the coating knife in the longitudinal direction is designed so that the precursor layer is formed and excess precursor is doctored off. Such cross-sectional profile can vary widely, and it can be, for example, essentially planar, curved, concave or convex. The profile can be sharp or square, or it can have a small radius of curvature providing a so-called bull-nose. A hook-type profile may be used to avoid a hang-up of the trailing edge of the precursor layer at the knife edge. A coating knife having a bull-nose type or radius type profile is shown, for example, in Figs. 2a and 2b.

The coating knives can be arranged essentially normal to the surface of the web, or they can be tilted whereby the angle between the web and the downstream surface of the coating knife preferably is between 50° and 130° and more preferably between 80° and 100°.

The bottom portion of the coating knife is preferably selected to extend at least across the desired width of the coating in a direction essentially normal to the downstream direction. The coating knife is preferably arranged opposite to a roll so that the substrate is passing between the transversely extending edge of the coating knife and the roller. Thus the substrate is supported by the roller so that the substrate is not sagging in a direction normal to the downstream direction. In this arrangement the gap between the coating knife and the surface of the substrate can be adjusted precisely. If the coating knife is used in an unsupported arrangement, the substrate is held in place by its own tension but may be sagging to some extent in a direction normal to the downstream direction. Sagging of the substrate can be minimized by arranging the coating knife over a short span of the substrate between adjacent rollers. If a continuous substrate is used, sagging can be further minimized by guiding it over an endless conveyor belt. Another option to avoid/minimize sagging is guiding the substrate over a rigid surface.

The coating knives useful in the present disclosure are solid, and they can be rigid or flexible. They are preferably made from metals, polymeric materials, glass or the like. Flexible coating knives are relatively thin and preferably between 0.1 and 0.75 mm thick in the downstream direction and they are preferably made of flexible steels such as stainless steel or spring steel. Rigid coating knives can be manufactured of metallic or polymeric materials, and they are usually at least 1 mm, preferably at least 3 mm thick. A coating knife can also be provided by a continuously supplied polymer film which is tensioned and appropriately deflected by rollers, bars, rods, beams or the like to provide a transversely extending coating edge facing the substrate. If desirable, the polymer film can simultaneously be used as a release liner or as a solid film incorporated into the precursor of the multilayer film.

In the present disclosure a lower layer of a curable liquid precursor (i.e. any layer different from the top layer) is coated with an adjacent upper layer of a curable liquid precursor or a solid film, respectively, essentially from its onset. Thus, the lower curable liquid precursor layer is directly covered by the adjacent upper layer of a curable liquid precursor layer or by the solid film, respectively, essentially without exposing said lower curable liquid precursor layer. A solid film is preferably applied along the upstream side of the coating knife which also provides the lower layer of a curable liquid precursor. The film is thus attached to the upper surface of the lower layer essentially during the formation of said layer and the lower layer is not exposed. Directly depositing an upper layer of a curable liquid precursor onto the upper surface of said lower layer without exposing such upper surface of the lower layer can be accomplished by appropriately arranging the two coating knives forming the two layers. In one embodiment, the liquid precursors are applied via two coating stations abutting each other in the downstream direction whereby the back walls of the coating chambers comprise or form, respectively, the coating knives. The lower layer when formed by the corresponding coating knife is thus directly covered with the curable liquid precursor of the upper layer contained in the corresponding coating chamber. Generally the coating knife forming the upper layer needs to be arranged so that the lower layer, upon its formation at the corresponding coating knife, is essentially directly covered with the curable liquid precursor forming the upper layer.

In another embodiment, a solid film such as, in particular, a release liner is applied to the exposed surface of the top layer essentially simultaneously with the formation of such top layer. The solid film can be applied, for example, along the upstream surface of the most downstream coating knife (i.e. the back wall) of the coating apparatus. In this embodiment the solid film is smoothly attached to the exposed surface of the top layer in a snug fit thereby avoiding a compression of the top layer or the multilayer stack, respectively, or the inclusion of air between the solid film and the exposed surface of the top layer.

Although the present inventors do not wish to be bound by such theory, it is speculated that the above deposition of a solid film or of the liquid precursor forming the adjacent upper layer, respectively, onto the lower liquid precursor layer essentially simultaneously with the formation of the lower layer by means of coating knives results in multilayer films characterized by superior properties. The multilayer films of the present disclosure exhibit, for example, both well-defined, relatively sharp interfaces between adjacent layers or films, respectively, and a strong anchorage of adjacent layers or films so that the films of the present disclosure typically exhibit a higher T-peel strength than corresponding films obtained by lamination of the corresponding layers. The multilayer films of the present disclosure furthermore exhibit superior optical properties like a high optical transmission, a low color shift and a low maximum aberration of a wavefront resulting from a normally impinging planar wavefront after its transmission through the multilayer film.

In an embodiment of the present disclosure, the precursor of the multilayer film is obtained by using a coating apparatus comprising one or more coating stations. The coating stations may comprise one or more coating chambers and, if desired, a rolling bead upstream to the most upstream coating chamber. The coating chambers each have an opening towards the substrate moving beneath the coating chambers so that the liquid precursors are applied as layers superimposed onto each other. The liquid precursor of the rolling bead is applied, for example, via the upstream surface of the most upstream coating knife.

The coating chambers each have an upstream wall and a downstream wall preferably extending essentially transversely with respect to the downstream direction. The most upstream wall of the coating apparatus is also referred to as front wall and the most downstream wall as back wall of the coating apparatus, respectively. In case two or more coating chambers are present, the downstream wall of an upstream coating chamber preferably is in an essentially abutting arrangement with the upstream wall of the adjacent downstream coating chamber. This means that the distance between the downstream wall of an upstream coating chamber and the upstream wall of the adjacent coating chamber preferably is less than 2.5 mm, more preferably less than 1 mm and especially preferably there is no distance at all between these walls. In a particular embodiment, the downstream wall of an upstream coating chamber and the upstream wall of the adjacent down stream coating chamber are integrated into one wall which is referred to above and below as an intermediate wall.

The downstream walls each comprise a coating knife facing the substrate. The coating knives are arranged above the exposed surface of the substrate onto which the liquid precursors are attached thereby providing for clearance between the bottom portion of the coating knife facing the substrate and the exposed surface of the substrate or the exposed layer of the liquid precursor or precursors attached previously, respectively. The distance between the bottom portion of the coating knife and the surface of the substrate as measured in a direction normal to the surface of the substrate is referred to above and below as gap. The liquid precursors are supplied from the coating chamber to the upstream side of the respective coating knife. The gap between the coating knife and the surface of the substrate is adjusted to regulate the thickness of the respective coating in conjunction with other parameters including, for example, the speed of the substrate in the downstream direction, the thickness normal to the substrate of the liquid precursor layers or solid films, respectively, already applied, the viscosity of the liquid precursor to be applied through the respective gap, the viscosity of the liquid precursor(s) already applied, the kind, form and profile of the coating knife, the angle with which the coating knife is oriented relative to the normal of the substrate, the position of the knife along the extension of the coating apparatus in the downstream direction and the kind of the substrate.

The coating knife can be a separate element attached to the respective downstream wall or it can form the downstream wall, respectively. It is also possible that one or more downstream walls are provided as solid films such as release films.

The knife profile can be optimized for a specific liquid precursor supplied through a coating chamber by using a rotatable coating knife device equipped with several coating knives having a different knife profile. The person skilled in the art can thus quickly change the coating knives used as back wall, front wall or intermediate walls, respectively, in the different coating chambers and evaluate the optimum sequence of coating knife profiles in a coating apparatus for manufacturing a specific multilayer film.

If the coating apparatus useful in the present disclosure comprises only one coating chamber both the upstream wall and the downstream wall of the coating chambers comprise or form, respectively, coating knives. The liquid precursor can be supplied to the upstream edge of the front wall, for example, by means of a so-called rolling bead, or it can be supplied by any kind of hopper.

If the coating apparatus of the present disclosure comprises two or more coating chambers, the front wall may or may not form a coating knife. If the front wall does not form a coating knife it may be arranged so that there is essentially no gap between the transverse extension of the bottom portion of the front wall facing the substrate and the exposed surface of the substrate so that an upstream leakage of the liquid precursor is reduced and/or minimized. If the front wall is a coating knife, the profile of its bottom portion may be formed so that an upstream leakage of the liquid precursor contained in the first upstream coating chamber is suppressed. This can be achieved, for example, by using an essentially radius type profile of the transversely extending edge of the front wall facing the substrate.

The coating cambers each have a downstream wall, an upstream wall and two or more side walls essentially extending in the downstream direction, whereby the downstream wall of an upstream chamber and the upstream wall of an adjacent downstream chamber may be integrated into one intermediate wall. The cross-section of the coating chambers in the downstream direction can vary broadly and can be, for example, square, rectangular, polygonal or regularly or irregularly curved. The downstream wall, upstream wall and/or the side walls may be present as separate elements but it is also possible, for example, that a coating chamber is formed as one piece or that the upstream walls and the side walls, for example, are formed as one piece separate from the downstream wall coating knife. It is generally preferred that the downstream wall is a separate element or piece so that the coating knives representing the downstream wall can be easily replaced, for example, by means of a revolvable coating knife device. In case the coating apparatus comprises two or more coating chambers their respective cross-sections are preferably selected that adjacent coating chambers can be arranged in an essentially abutting configuration in the downstream direction. The upstream walls and the downstream walls of the coating chambers preferably are essentially straight in the direction transverse to the downstream direction.

The extension of a coating chamber in the downstream direction, i. e. the distance between the front wall and the back wall of a coating chamber is preferably between 2 mm and 500 mm and more preferably between 5 and 100 mm. Although the present inventors do not wish to be bound by such theory. it is speculated that if the distance between the front wall and the back wall is too small the flow of the liquid precursor towards the gap tends to become instable which results in undesirable coating defects such as, for example, streaks or "brushmarks". If the distance between the front wall and the back wall of the coating chamber is too large, the continuous flow of the liquid precursor towards the gap may rupture so that the continuous coating of the moving substrate may cease and/or mixing might occur. The flow pattern in a coating chamber or trough is discussed in more detail in US 5,612,092, col. 4, In. 51 to col. 5, In. 56. This passage is incorporated by reference into the present specification.

The volume of the coating chambers is defined by their respective cross-section parallel to the surface of the substrate and their respective height normal to the surface of the substrate. The height of the coating chambers preferably is between 10 and 1,000 mm and more preferably between 25 and 250 mm. The volume of the coating chambers is preferably selected as a function of the coating width transverse to the downstream direction.

The coating chambers may be fitted with heating or cooling means so that the viscosity of the liquid precursors can be controlled and adjusted if necessary.

The liquid precursors are preferably applied under ambient pressure so that the volume flow of the precursors mainly results from the shear forces acting on the precursors as a result of the movement of the substrates and, optionally, of the solid films or webs introduced into the precursor multilayer film. The volume flow of the liquid precursors is supported by the hydrostatic pressure of the precursor comprised in the respective coating chamber. It is preferred in the method of the present disclosure that the force resulting from the hydrostatic pressure is low in comparison to the drag force or forces exerted by the moving substrate and, optionally, moving solid films. The height of the liquid precursor in a coating chamber is preferably controlled so that such height corresponds to at least the width of the coating chamber in the downstream direction throughout all of the coating process. If the height of the liquid precursor in a coating chamber is less than the width of the coating chamber in downstream direction partial mixing of the precursor applied through such coating chamber with an adjacent lower precursor layer may occur. The height of the liquid precursor in the respective coating chamber is preferably kept essentially constant.

It is also possible that the coating chambers are pressurized with air or an inert gas such as nitrogen or argon. The coating apparatus may be equipped so that the coating chambers may be pressurized separately and individually which may be desirable, for example, to counterbalance differences in viscosity between the different liquid precursors or differences in height of the liquid precursor column in the coating chambers. Preferably, the coating chambers are not completely filled with the respective liquid precursor so that the liquid precursor is pressurized via a gas atmosphere arranged on top of the liquid precursor. The total over-pressure exerted onto the respective liquid precursor is selected so that the process continues to run in a self-metered fashion, i.e. so that there is no inverse proportionality between the wet coating thickness of a precursor layer and the downweb speed of the substrate. The total over-pressure exerted onto the respective liquid precursor preferably is less than 0.5 bar and more preferably not more than 0.25 bar. In an especially preferred embodiment no gas over-pressure is applied, i.e. the process of the present disclosure is preferably run under ambient conditions.

The substrate is moved relatively to the coating knives in the downstream direction to receive a sequence of two or more layers of the liquid precursors which are superimposed onto each other in a direction normal to the downstream direction.

The substrate can be a temporary support from which the multilayer film is separated and removed subsequent to curing. When used as a temporary support the substrate preferably has a release coated surface adapted to allow for a clean removal of the cured multilayer film from the substrate. It may be desirable that the substrate when providing a temporary support remains attached to the multilayer film when winding it up, for example, for storage. This is, for example, the case if the bottom layer of the multilayer film is an adhesive layer such as a pressure-sensitive adhesive layer. The release-coated substrate protects the surface of the pressure-sensitive adhesive layer, for example, from contamination and allows the multilayer film to be wound up into a roll. The temporary substrate will then only be removed from the multilayer film by the final user when attaching the multilayer film to a surface, for example. In other embodiments where the surface of the first layer of the multilayer film facing the substrate does not need to be protected, the substrate providing a temporary support may be removed and wound up subsequent to curing the precursor layers and prior to storing the multilayer film. In another embodiment, the substrate providing a temporary support may be provided by an endless belt preferably having an exposed release surface. The multilayer film obtained after curing the stack of layers of liquid precursors separates from the endless belt and can be wound up, for example.

Alternatively, the substrate can be integrated as a layer into the resulting multilayer film. In such case, the substrate is continuously fed as a film or web and collected as a part of the multilayer film subsequent to the curing of the liquid precursor layers. The surface of the substrate may preferably be subjected, for example, to a corona treatment to enhance the anchoring of the cured bottom polymeric layer to the substrate. Anchoring of the bottom polymeric layer to the substrate may also be improved by applying a so-called tie layer onto the surface of the substrate prior to coating the bottom liquid precursor layer to the substrate. Tie layers which are suitable in the present disclosure include, for example, 3M Primer 4297, a polyamide based primer commercially available from 3M Co. or 3M Primer 4298, a primer comprising an acrylic polymer and a chlorinated polyolefin as active substances which is commercially available from 3M Co.

Substrates which are suitable both as temporary substrates or as substrates for incorporation into the multilayer film, respectively, can be selected from a group comprising polymeric films or webs, metal films or webs, woven or non-woven webs, glass fibre reinforced webs, carbon fibre webs, polymer fibre webs or webs comprising endless filaments of glass, polymer, metal, carbon fibres and/or natural fibres. Depending on the nature of the liquid precursor applied as a bottom layer onto the substrate and on whether the substrate is used as a temporary support or as an integral layer of the multilayer film, the person skilled in the art can decide without any inventive input whether a treatment of the substrate surface is required or desirable. It was found by the present inventors that the method of the present disclosure is relatively insensitive to the roughness of the exposed surface of the substrate. The surface roughness can be characterized by the arithmetic average surface roughness $R_a$ which can be measured, for example, by laser profilometry. Polymeric films suitable for use in the present disclosure may have $R_a$ values of, for example, 1 - 20 $\mu$m or more preferably of 1 - 10 $\mu$m whereas non-woven webs may have $R_a$ values of between 10 and 150 $\mu$m and more preferably between 15 and 100 $\mu$m. The multilayer films obtainable by the method of the present disclosure exhibit, essentially independent of the surface roughness $R_a$ of the substrate, a bottom polymer layer with a homogenous thickness along the extension of the web in the downstream direction. The average deviation of the thickness of the bottom polymer layer in a direction normal to the downstream direction preferably is over an arbitrarily selected distance of 10 mm less than 10 %, more preferably less than 5 % and especially preferably less than 2.5 %.

If the substrate is used as a temporary support its optionally release treated surface facing the coating knives preferably is essentially impermeable with respect to the liquid precursor applied to the substrate.

If the substrate forms an integral part of the multilayer film subsequent to curing the precursor of the multilayer film, it is also desirable that the optionally treated surface of the substrate is essentially impermeable with respect to the bottom precursor layer or that the bottom liquid precursor does at least not migrate to the opposite surface of the substrate prior to curing, respectively. In case of substrates having a certain porosity such as, for example, non-woven substrates or paper it may be desirable that the liquid precursor penetrates into the surface area into the bulk of the substrate, respectively, so that the interfacial anchorage between the first polymer layer and the surface of the substrate is improved. The penetration or migration behavior of the liquid precursor relative to a given substrate can be influenced, for example, by the viscosity of the liquid precursor and/or the porosity of the substrates.

The thicknesses of the liquid precursor layers normal to the substrate are mainly influenced by the gap between the bottom portion of the coating knife and the surface of the substrate, the respective viscosities of the liquid precursors and the downstream speed of the substrate.

The thickness of the liquid precursor layers preferably is independently of each other between 25 $\mu$m and 3,000

μm, more preferably between 75 μm and 2, 000 μm and especially preferably between 75 μm and 1,500 μm. The desirable thickness of a coating layer depends, for example, on the nature of the liquid precursor and the resulting cured polymer layer.

The gap width required to provide a desired value of the thickness of the precursor layer depends on various factors such as the profile of the coating knife, the angle of the coating knife normal to the substrate, the downstream speed of the substrate, the number of layers of liquid precursors to be coated, the absolute values of the viscosities of the liquid precursors and the ratio of the absolute values of the viscosity of a specific precursor with respect to the absolute viscosity values of the liquid precursor present in adjacent layers. Generally, the gap width needs to be larger than the desired thickness of the respective layer of the liquid precursor regulated by such gap. It is disclosed, for example, in Kirk-Othmer, Encyclopedia of Chemical Technology, 4th ed., ed. by J. Kroschwitz et al., New York, 1993, vol. 6, p. 610, as a rule of thumb that the thickness of the liquid precursor layer obtained by means of a coating knife arranged normal to the substrate and having a transversely extending bottom portion with a square profile arranged in parallel to the substrate is about half the width of the gap for a wide range of substrate speeds.

The gap width is measured in each case as the minimum distance between the bottom portion of the coating knife facing the substrate and the exposed surface of the substrate. The gap is preferably adjusted to a value between 50 μm and 3,000 μm and more preferably between 100 μm and 2,500 μm.

The Brookfield viscosity of the liquid precursors at 25 °C preferably is between 100 and 50,000 mPa·s, more preferably between 500 and 30,000 mPa·s and particularly preferred between 500 and 25,000 mPa·s. If the liquid precursor comprises solid particles such as, for example, pigments or thermally and/or electrically conducting particles, the viscosity of the liquid precursor preferably is between 1,000 and 30,000 mPa·s and more preferably between 3,000 and 25,000 mPa·s.

It was found by the present inventors that liquid precursors having a lower Brookfield viscosity can be coated faster and thinner. If a layer thickness of the liquid precursor of less than 500 μm is required, the Brookfield viscosity of the liquid precursor preferably is less than 15.000 mPa·s and more preferably between 500 mPa·s and 12.500 mPa·s.

If the viscosity of the liquid precursor is less than about 100 mPa·s, the coated layer tends to get unstable and the thickness of the precursor layer may be difficult to control. If the viscosity of the liquid precursor is higher than about 50.000 mPa·s, coating of homogeneous films tends to get difficult due to high shear forces induced by the high viscosity. If the liquid precursor comprises curable monomers and/or oligomers the viscosity of the precursor may be increased in a controlled way within the ranges given above by partially polymerizing the precursor to provide a desirable coatability. Alternatively, the viscosity of the liquid precursor may be increased and adjusted by adding thixotropic agents such as fumed silica and/or polymer adds such as blockcopolymers (SBRs, EVAs, polyvinylether, polyalphaolefins), silicones or acrylics. The viscosity of the liquid precursor may also be decreased, for example, by increasing the amount of curable monomers and/or oligomers.

It was found that, within a stack of liquid precursor layers, the absolute and/or relative thickness of a first upper layer of a liquid precursor having a first Brookfield viscosity at 25 °C is typically increased with increasing downstream speed of the substrate in comparison to the absolute and/or relative thickness of a second layer of a liquid precursor which is adjacent to the first layer and the precursor of which has a second Brookfield viscosity at 25 °C which is lower than that of said first precursor. The term relative thickness of a specific liquid precursor layer is defined as the ratio of the thickness of this precursor layer over the thickness of the completed stack of liquid precursor layers prior to curing, i. e. the thickness of the precursor multilayer film.

It was furthermore found that the ratio of the Brookfield viscosities of the liquid precursors of an upper liquid precursor layer and a lower, adjacent liquid precursor layer within a stack of precursor layers preferably is between 0.1 and 10 and more preferably between 0.2 and 7.5. It was found that if such ratio is outside of these preferred ranges the thicknesses of such liquid precursor layers may become inhomogenous in the downstream direction.

The downstream speed of the substrate preferably is between 0.05 and 100 m/min, more preferably between 0.5 and 50 m/min and especially preferably between 1.5 and 50 m/min. If the downstream speed of the substrate is less than 0.05 m/min the flow of the liquid precursors towards the gap becomes slow and instable resulting in coating defects. If the downstream speed of the substrate is higher than 100 m/min turbulences might occur at the interfaces between the precursor layers which may, depending on the viscosity and rheology of the precursors, result in uncontrolled mixing and/or coating defects.

It was found by the present inventors that for a specific viscosity of a liquid precursor the quality of the coating may unacceptably deteriorate if the downstream speed of the substrate is selected too high. The deterioration in quality may be reflected in the entrainment of air bubbles or in the occurrence of a streaky and non-uniform coating. The coating speed is preferably adapted so that all liquid precursor layers in a stack of such layers are coated uniformly and with a high quality, i.e. the most speed-sensitive layer determines the overall downstream speed. If the downstream speed of the substrate is selected too low, a reduction of the layer thickness may not be achievable by the reduction of the corresponding gap width only but may also require an increase of the downstream speed. It was furthermore found by the present inventors that the downstream speed of the substrate is preferably selected between the maximum and minimum values specified above. In such downstream speed interval the thickness of the liquid precursor layers is relatively insensitive to variations of the downstream speed so that the thickness of the liquid precursor layer can be majorly regulated by the gap width.

The liquid precursors suitable in the present disclosure comprise a broad range of precursors which can be cured by exposure to actinic radiation and, in particular, to UV-radiation, gamma-radiation and E-beam or by exposure to heat. The liquid precursors are preferably light-transmissive to visible light. In a preferred embodiment the precursors used in the multilayer film of the present disclosure are select so that a cured single film of the precursor having a thickness of 300 $\mu$m exhibits a transmission of at least 80% relative to visible light (D65) as measured according to the test method specified in the test section below. The precursor used in the multilayer films of the present disclosure more preferably exhibit when present as a single 300 $\mu$m thick cured film a transmission of at least 90 % and especially preferably of at least 95%.

The light-transmission of the multilayer film relative to visible light which results from the light transmission of the superimposed polymer layers preferably is at least 80%, more preferably at least 85% and especially preferably at least 90%.

Precursors the curing of which does not include the release of low molecular weight condensate molecules such as water or alcohol molecules or includes such release only to a low amount, are usually preferred because the condensate molecules of non-exposed liquid precursor layers can typically not be fully discharged from the multilayer film.

The method of forming multilayer films of the present disclosure is highly versatile and allows for making a broad range of multilayer films with tailor-made properties.

While the present inventors do not wish to be bound by such considerations, it is speculated that the method of the present disclosure establishes a high quality laminar flow regime which is not accessible by prior art methods.

In contrast to the pre-metered die coating methods for making multilayer films which are disclosed in the prior art, the process of the present disclosure is a self-metered process wherein the flow of the liquid curable precursors mainly results from shear forces. These are provided by the substrate or the layers already attached to it moving in the downstream direction thereby exerting a drag flow onto the respective liquid precursor. Shear forces are also provided by the solid film or films, respectively, if present, moving initially along the upstream side of the coating knife towards the substrate and then, after being deflected at the transversely extending edge of the coating knife, parallel to the susbstrate in the downstream direction. It is believed that the volume flow resulting from these shear forces is essentially laminar and stable and that any turbulences which might occur, for example, when forming the liquid precursor layers at the respective gaps, are effectively dampened by essentially simultaneous applying the liquid precursor layers and, optionally, the solid film or films onto each other. The essentially simultaneous application of an upper adjacent liquid precursor onto a lower liquid precursor layer is preferably provided by arranging the coating knives appropriately. The essentially simultaneous application of an adjacent upper solid film, if present, is preferably provided by guiding such film along the upstream surface of the coating knife forming the lower precursor layer.

In the pre-metered die coating processes for making multilayer films, the volume flow rate that is provided by the metering pump equals the flow rate that exits the die. Therefore such flow rate is essentially constant independently of the downweb speed of the substrate so that the thickness of a precursor layer coated onto the substrate or a preceding precursor layer, respectively, is essentially inversely proportional to the downweb speed of the substrate. Contrary to that, in the self-metered coating process of the present disclosure the volume flow rate applied via the respective coating knife to the web is not constant but varies with the web speed and the wet thickness of a coated precursor layer is mainly influenced by the interactions of the liquid precursor flow with the coating apparatus of the present disclosure (cf. S.F. Kistler et al., Liquid Film Coating, loc cit., p.10, bottom of left col. and chapters 12 and 13). In the present disclosure the volume flow rate tends to increase with increasing web speed so that there is no inverse proportional relationship between the wet film thickness and the downweb speed of the substrate. The self-metered process of the present disclosure is furthermore characterized by the presence of an excess of the liquid precursors in the respective coating chambers which is metered by the coating knife to the moving web. In contrast to that pre-metered die coating processes are characterized by a constant volume flow so that what is conveyed by the pump is also applied to the moving web. Thus the self-metered process of the present disclosure is fundamentally different from the pre-metered die coating process used in the prior art.

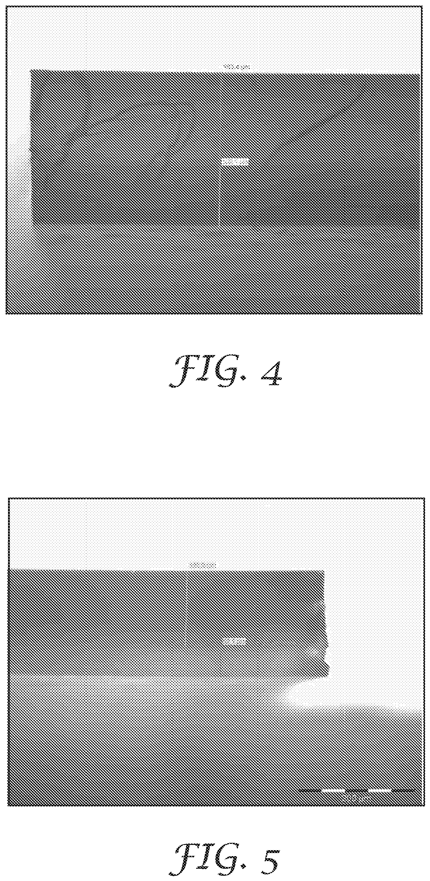

The multilayer films obtainable by the method of the present disclosure preferably exhibit essentially homogenous properties such as, for example, an essentially homogenous thickness of the cured polymer layers in the transverse direction. It is speculated by the present inventors that the stable flow pattern established by the shear force regime of the present disclosure results in a flow history of the liquid precursors which is essentially constant over the coating width for all precursors. The average deviation of the thicknesses of the cured layers of the multilayer film in a direction normal to the downstream direction preferably is over an arbitrarily selected distance of 10 mm less than 5 %, more preferably less than 2.5 % and especially preferably less than 2 %. The excellent uniformity of the cured multilayer films can be taken, for example, from the cross-sectional microphotos in Figs. 4 - 8 below.

In the method of the present disclosure the volume flow mainly resulting from the shear force regime is mainly controlled by the gaps between the respective coating knives and the substrate, the arrangement of the coating knives relative to each other, the geometry of the bottom portion of the coating knives, the speed of the substrate and the viscosity of the curable liquid precursors. These parameters are easy to control and can be varied widely without adversely affecting the stable flow pattern which is essentially laminar and essentially homogenous in the transverse direction. In the process of the present disclosure the gaps between the respective coating knives and the substrate can be changed and adjusted in a wide range while the coating process is running. The process of the present disclosure is thus more versatile and easy to handle in comparison to the pre-metered die coating processes for multilayer stacks of wet precursor layers of the state of the art.

The method of the present disclosure provides novel multilayer films with unique properties and, in particular, with preferred optical properties such as, in particular, a high optical transmission for visible light. While the present inventors do not wish to be bound by such theory it is speculated that this is resulting from a micro-diffusion taking place at the interface between adjacent layers.

The extent of such micro-diffusion is believed to be on the one hand small enough so that it does not affect the integrity of adjacent layers. This can be taken, for example, from the microphotographs of Figs. 4-8 which show clearly recognizable and sharp-edged interfaces between adjacent layers. This can be demonstrated, for example, by adding a dye to one of a pair of adjacent cured layers while not adding a dye to the other cured layer. Cross-sectional microphotos from such multilayer films preferably show a sharp transition from the dyed layer to the non-dyed layer, and the interface preferably is not blurred.

The extent of such micro-diffusion is believed to be on the other hand large enough to provide a micro-gradient at the interface which results, for example, in a gradual transition between the refractive indices of adjacent layers and hence in an increased transmission. The appearance of the interface between two adjacent liquid precursor layers and hence the extent of the micro-diffusion can mainly be influenced by the viscosity of the liquid precursors of the two adjacent precursor layers. The interfacial area between two adjacent precursor layers typically is the more sharp-edged the higher the viscosity of the two liquid precursors. It is believed that interfacial micro-diffusion or micro-mixing can be enhanced by decreasing the Brookfield viscosity of at least one of the precursors of the adjacent layers to less than 5,000 mPa·s, more preferably less than 2,500 mPa·s and especially preferably to from 500 - 1,500 mPa·s. The interfacial micro-diffusion is believed to be further enhanced when the liquid precursors of both adjacent layers exhibit, independently from each other, a Brookfield viscosity of less than 5,000 mPa·s, more preferably of less than 2,500 mPa·s and especially preferably of between 500 - 1,500 mPa.s.

The micro-diffusion is also believed to increase the bonding strength between adjacent layers of the multilayer film upon curing which is reflected, for example, in improved mechanical properties such as an increased T-peel strength.

The top cured polymer layer of the multilayer film preferably exhibits an excellent finish of its exposed surface, i. e. low surface roughness as evaluated, for example, in terms of the surface roughness $R_z$.

The unique properties of the method of the present disclosure are reflected in the properties of multilayer films obtainable by such method and of assemblies comprising such multilayer films, respectively. A preferred assembly of the present disclosure comprises a light-transmissive multilayer film obtainable by the method of the present disclosure and a glass substrate. The multilayer film used in such assembly is attached through an outer adhesive layer to the glass substrate wherein the superimposed polymer layers of the multilayer film each have a transmission of at least 80% relative to visible light and wherein the refractive index of the adhesive layer is lower than the refractive index of the opposed outer layer. The transmission of the polymer layers relative to visible light is measured according to the test method specified in the test section below for cured single precursor layers having a thickness of 300 $\mu$m each. The precursor layers used in the multilayer films of the present disclosure more preferably exhibit when present as a single 300 $\mu$m thick cured film a transmission of at least 90 % and especially preferably of at least 95%. The light-transmission of the multilayer film relative to visible light which results from the light transmission of the superimposed polymer layers preferably is at least 80%, more preferably at least 85% and especially preferably at least 90%. If desired the multilayer film may comprise light-transmissive solid films such as, for example, light-transmissive polymer films or webs. It was found that assemblies with an advantageous transmission relative to visible light are obtained if the refractive index of the outer adhesive layer attached to the glass substrate is lower than the refractive index of the opposite outer layer. This requirement is counterintuitive and it is believed to be based on the interfacial micro-diffusion described above. The glass substrate can be selected from conventional silica based glasses such as, for example, float glass but also from polymer glasses such as, for example, acrylic glass, polycarbonate glass or polyethylene terephthalate glass. The refractive index of glasses suitable in the present disclosure $n_{589\ nm,\ 23\ °C}$ preferably is between 1.48 and 1.52.

When manufacturing the multilayer film useful in the above assembly the adhesive layer may preferably be coated as the top layer (which is attached to the surface of the glass substrate in the assembly and thus forms a non-exposed outer layer of the multilayer film) and covered, for example, with a release liner whereas the opposite outer layer is preferably coated as the bottom layer (which forms the outer layer of the assembly opposite to the adhesive layer). It is, however, also possible that the adhesive layer of the multilayer film used in the assembly is coated as the bottom layer during the method; in such case the substrate preferably is integrated into the multilayer film and forms a release liner attached to the adhesive layer. In the above assembly the difference between the refractive indices of the two outer layers (=outer layer opposite to adhesive layer and adhesive layer, respectively) preferably is less than 0.030. More preferably, the outer adhesive layer of the multilayer film has a refractive index $n_{589n,23°C}$ which is not more than 0.0025, more preferably not more than 0.0020, especially preferably not more than 0.0015, highly preferably not more than 0.0010 and most preferably not more than 0.0008 lower than the refractive index $n_{589n,23°C}$ of the opposed outer layer. In such films the transmission is measured according to the test method specified in the test section below for single precursor layers having a thickness of 300 $\mu$m each. The transmission is at least 80%, more preferably at least 90% and especially preferably at least 95% for each cured layer. In a more preferred embodiment the refractive indices of precursor layers arranged between the two outer layers, if present, is larger than the refractive index of the outside adhesive layer and smaller than the refractive index of the opposite outside layer. The refractive indices are measured at a wavelength of 589 nm and a temperature of 23 °C as is described in the test section below.

The method of the present disclosure furthermore allows for the incorporation of solid films such as polymeric films or webs, metal films or webs, woven or non-woven webs, glass fibre reinforced webs, carbon fibre webs, polymer fibre webs or webs comprising endless filaments of glass, polymer, metal, carbon fibres and/or natural fibres. In a coating apparatus containing one or more coating chambers such solid films can be introduced along the upstream surface of the front wall, any intermediate wall and the back wall, respectively. In the schematic illustration of Fig. 1 showing an arrangement of 3 coating chambers and a rolling bead arranged upstream to the most upstream coating chamber, a solid film is guided via the upstream surface of the most upstream intermediate wall thereby positioning the solid film in a snug fit on the second liquid precursor layer provided by the first upstream coating chamber. Fig. 1 furthermore shows the insertion of a release liner along the upstream surface of the back wall. This arrangement provides a precursor of a multilayer comprising 4 precursor layers, a solid film inserted between the 2nd and 3rd precursor layer from the bottom and a release liner attached to the exposed surface of the top layer. This is exemplary only, and the person skilled in the art will select the solid film or films suitable for providing a specific multilayer film with a desired profile of properties and will vary the arrangement and the number of such films within the multilayer film. If less than four liquid layers are required the corresponding number of downstream coating knives and/or the rolling bead are omitted. The top release liner if desired is attached to the exposed surface of the top layer in a snug fit, i.e. for example via the upstream surface of the most downstream coating knife of the modified assembly.

If the solid film is a release liner, this may be arranged beneath the bottom precursor layer or on top of the top layer of the multilayer film to protect the exposed surfaces of the bottom and top precursor layers, respectively. A release film when included into the multilayer film as an intermediate layer between the bottom and the top polymer layer, respectively, introduces a predetermined breaking surface into the multilayer film. This can be used, for example, to prepare a stack of multilayer films in a single production process from which the individual multilayer films can be easily obtained by peeling along the release surface.

Solid films other than release liners form an integral part of the cured multilayer film. The solid films are also referred to as backing in the cured multilayer film.

In one embodiment, multilayer films of the present disclosure comprise at least two superimposed polymer layers obtainable by the method of the present disclosure wherein a release liner is applied to the exposed surface of the top layer of the precursor essentially simultaneously with the formation of such layer. This is preferably achieved by guiding and applying the release liner via the upstream surface of the most downstream coating knife, i.e. the upstream surface of the back wall of the coating apparatus. This is schematically illustrated in Fig. 1. In an alternative embodiment, the back wall can be provided by the release liner which is suitably tensioned and deflected by rollers, rods, bars, beams or the like to provide a transversely extending edge facing the substrate. In this case the additional back wall can be omitted.

Since the release liner is applied to the exposed surface of the top liquid precursor layer essentially simultaneously with the formation of such layer it is smoothly attached to the top layer in a snug fit without exerting too much pressure or insufficient pressure, respectively, during the application of the liner. Since the liner is arranged in a snug fit the formation of voids between the liner and the surface of the liquid layer is essentially avoided. Likewise, since the release liner is applied along the upstream surface of the coating knife forming the liquid layer the liner is smoothly attached to the surface of the liquid layer essentially without creating turbulences in the liquid layer and the like. Therefore the problems encountered when attaching the liner to the exposed surface of a liquid layer subsequently to the formation of said liquid layer in a die-coating process of the state of the art can be widely avoided or at least diminished in the process according to the present disclosure. This is a unique advantage of the process of the present disclosure which translates into superior properties of multilayer films being obtainable by the method of the present disclosure wherein a release liner is attached to the exposed surface of the top layer of the precursor essentially simultaneously with the formation of said layer and subsequent curing. If desired the release liner can be subsequently removed.

In prior art methods of making multilayer films a release liner, if present, was typically applied to the exposed surface of the top precursor layer subsequent to the formation of such layer. In such methods the release liner was laid upon the exposed top layer using, for example, a guiding roller, bar, rod or beam. Such method requires an exact positioning of the distance between the surface of the substrate and the guiding roller which may be difficult under practical conditions. If the distance is too small too much pressure is exerted onto the top liquid precursor layer what results in a distortion of the topmost layer and in the formation of a fluid bead. The fluid bead induces a turbulent flow in the stack of liquid precursor layer so that mixing may occur. If the distance between the guiding roller and the substrate is too large, air-entrapment may occur between the release liner and the exposed surface of the top liquid precursor layer. This results in a poor surface finish of the cured topmost layer of the multilayer film characterized by high $R_z$ values. Also, curing of the topmost surface may be oxygen-sensitive. If the top liquid precursor layer comprises, for example, the precursor of an acrylate based pressure-sensitive adhesive, UV curing of such precursor will be impeded by the presence of oxygen so that an insufficient curing and hence distinctly diminished properties of the pressure-sensitive adhesive layer may occur.

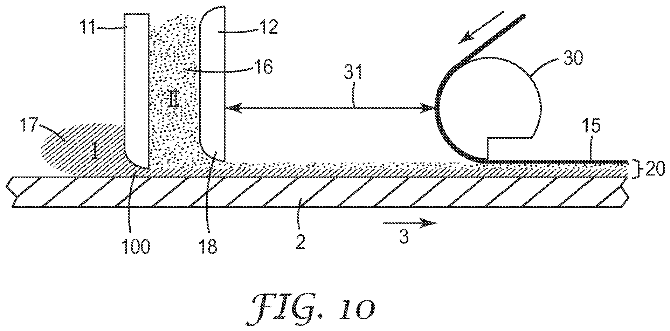

When applying a release liner to the exposed surface of the top precursor layer via an appropriate roller, bar, rod, bead or the like arranged downstream to the downstream surface of the back wall, the exposed surface of the top layer is exposed to the ambient atmosphere in the distance between the back wall and such downstream coating knife which may result in a degradation of the top layer. This distance which is schematically illustrated in Fig. 10 is also referred to above and below as open face distance.

It was surprisingly found that cured light-transmissive multilayer film of the present disclosure which are obtainable by attaching a release liner to the exposed surface of the top layer of the precursor essentially simultaneously with the formation of such layer with subsequent curing, exhibit improved optical properties such as, in particular, a higher transmission in comparison to a corresponding multilayer film obtained by attaching a release liner to the stack of liquid precursor layers subsequently to the formation of the top precursor layer, for example, via an appropriate roller or bar knife in an open face distance in downstream direction from the downstream surface of the back wall of the coating apparatus. Hence the multilayer films of the present disclosure which are obtainable by attaching a release liner to the exposed surface of the top layer of the precursor essentially simultaneously with the formation of such layer with subsequent curing, are preferred.

The ratio of the transmission of the multilayer film obtainable by attaching a release liner to the exposed surface of the top layer of the precursor essentially simultaneously with the formation of such layer, i.e., for example, along the inner surface of the most downstream coating knife, over the transmission of a corresponding multilayer film obtained by subsequently applying a release layer in an open face distance in a downstream direction to where the top layer is formed is at least 1.002, more preferably at least 1.003 and especially preferably at least 1.005.

In such multilayer films the precursor materials are preferably selected so that the corresponding cured single precursor layers when measured at a thickness of 300 $\mu$m each exhibit a transmission of at least 80% relative to visible light as measured according to the test method specified in the test section below. The precursor layers used in the multilayer films of the present disclosure more preferably exhibit when present as a single 300 $\mu$m thick cured film a transmission of at least 90 % and especially preferably of at least 95%. The light-transmission of the multilayer film relative to visible light which results from the light transmission of the superimposed polymer layers preferably is at least 80%, more preferably at least 85% and especially preferably at least 90%. If desired the multilayer film may comprise light-transmissive solid films such as, for example, light-transmissive polymer films or webs.

It was more specifically found by the present inventors that multilayer films of the present disclosure obtainable by curing a precursor wherein a release liner is applied to the exposed surface of the top layer of the precursor essentially simultaneously with the formation of such top layer with subsequent curing, exhibit advantageous properties in comparison to

(i) laminated multilayer films obtained by laminating the corresponding cured precursor layer upon each other;
(ii) multilayer films obtained by the die-coating method of the prior art (disclosed, e.g., in US 4,894,259/Kuller) where the release liner is attached to the exposed surface of the top layer surface at a position downstream to the most downstream coating knife, i.e. in an open face distance;
(iii) multilayer films obtained where the release liner is attached to the exposed surface of the top layer surface at a position downstream to the most downstream coating knife, i.e. in an open face distance; and
(iv) multilayer films obtained by applying one or more liquid precursor layers to one or more cured precursor films or one or more laminates of such precursor films with subsequent curing, irrespective of whether the release liner (if applied) was attached via the upstream surface of the back wall or an additional downstream coating knife.

It was found, for example, that the light transmission for visible light of the multilayer of the present disclosure with a release liner applied to the top precursor layer essentially simultaneously with its formation is higher than the light transmission for visible of the corresponding multilayer films as defined in (i) to (iv). It was furthermore found, for example, that the multilayer film of the present disclosure with a release liner applied via the upstream surface of the back wall exhibits a higher mechanical stability and, in particular, a higher T-peel strength than the corresponding multilayer films as defined in (i) and (iv) above.

The liquid precursors suitable in the present disclosure preferably comprise at least one compound having a radiation curable ethylene group. In a preferred embodiment, the radiation curable ethylene group is a (meth)acrylate group. In another preferred embodiment, the radiation curable ethylene group is a mono- and/or poly(meth)acrylate functional oligomer compound comprising at least one urethane bond. The term "oligomer" as used above and below refers to relatively low molecular weight polymeric compounds. Poly(meth)acrylate functional oligomer compounds comprising at least one urethane bond preferably have a weight average molecular weight $M_w$ between 500 and 35,000 and more preferably of between 1,000 and 30,000. Such oligomeric compounds are typically liquid at room temperature and ambient pressure whereby the Brookfield viscosity is preferably less than 500 Pa·s and more preferably less than 200 Pa·s at 25 °C.

The liquid precursor of the present disclosure preferably is essentially solvent-free, i.e. it does essentially not comprise any non-reactive solvents such as, for example, methanol, acetone, dimethylsulfoxide, or toluene. It is, however, possible though not preferred that the precursor comprises small amounts of one or more of such non-reactive solvents of preferably less than 2 pph and more preferably of less than 1 pph with respect to the mass of the precursor in order to lower the viscosity of the liquid precursor.

A preferred liquid precursor suitable in the present disclosure is curable to a pressure-sensitive adhesive. Especially preferred is a (meth)acrylate-based pressure-sensitive adhesive.

The liquid precursor of the (meth)acrylate based pressure sensitive adhesive comprises one or more alkyl (meth)acrylates, i. e. one or more (meth)acrylic acid alkyl ester monomers. Useful alkyl (meth)acrylates include linear or branched monofunctional unsaturated (meth)acrylates of non-tertiary alkyl alcohols, the alkyl groups of which have from 4 to 14 and, in particular, from 4 to 12 carbon atoms. Examples of these lower alkyl acrylates which are useful in the liquid precursor of (meth)acrylate based adhesives include n-butyl, n-pentyl, n-hexyl, cyclohexyl, isoheptyl, n-nonyl, n-decyl, isohexyl, isobornyl, 2-ethyloctyl, isooctyl, 2-ethylhexyl, tetrahydrofurfuryl, ethoxyethoxyethyl, phenoxyethyl, cyclic trimethlypropane formal, 3,3,5-trimethylcyclohexyl, t-butylcyclohexyl, t-butyl acrylates and methacrylates. Preferred alkyl acrylates include isooctyl acrylate, 2-ethylhexyl acrylate, n-butylacrylate, tetrahydrofurfuryl acrylate, isobornyl acrylate, ethoxyethoxyethyl acrylate, phenoxyethyl acrylate, 3,3,5-trimethylcyclohexyl acrylate,and cyclohexyl acrylate. Particularly preferred alkyl acrylates include isooctyl acrylate and tetrahydrofurfuryl acrylate. Particularly preferred alkyl methacrylates include butyl methacrylate, cyclohexyl methacrylate, and isobornyl methacrylate.

The liquid precursor of the (meth)acrylate based pressure sensitive adhesive preferably comprises up to 5 and, in particular, 1 - 4 (meth)alkyl acrylates. The amount of the alkyl acrylate compouds with respect the total mass of (meth)acrylate functionalized monomers, oligomers and/or polymers with the exception of crosslinkers preferably is at least 75 wt. %, more preferably at least 85 wt. % and especially preferably between 85 and 99 wt. %.

The liquid precursor of the (meth)acrylate based pressure sensitive adhesive may furthermore comprise one or more moderately polar and/or strongly polar monomers. Polarity (i. e., hydrogen-bonding ability) is frequently described by the use of terms such as 'strongly', 'moderately', and 'poorly'. References describing these and other solubility terms include 'Solvents', Paint Testing Manual, 3rd ed., G.G. Seward, Ed., American Society for Testing and Materials, Philadelphia, Pennsylvania, and 'A Three-Dimensional Approach to Solubility', Journal of Paint Technology, Vol. 38, No. 496, pp. 269 - 280. Examples for strongly polar monomers are acrylic acid, methacrylic acid, itaconic acid, hydroxyalkyl acrylates, acrylamides and substituted acrylamides while, for example N-vinyl pyrrolidone, N-vinyl caprolactam, acrylonitrile, vinylchloride, diallyl phthalate and N,N-dialkylamino (meth)acrylates are typical examples of moderately polar monomers. Further examples for polar monomers include cyano acrylate, fumaric acid, crotonic acid, citronic acid, maleic acid, ß-carboxyethyl acrylate or sulfoethyl methacrylate. The alkyl (meth)acrylate monomers enumerated above are typical examples of relatively poorly polar monomers. The amount of more moderately polar and/or strongly polar monomers preferably is not too high and, in particular, does not exceed 25 wt. % with respect to the total mass of meth)acrylate functionalized monomers, oligomers and/or polymers with the exception of crosslinkers.

The liquid precursor of the (meth)acrylate based pressure sensitive adhesive may furthermore comprise one or more monomers like mono- or multifunctional silicone (meth)acrylates. Exemplary silicone acrylates are Tego Rad products from the Evonik company, Germany, methacryyloxyurea siloxanes or acrylamidoamido siloxanes.

Ethylenically unsaturated partly- or perfluorinated mono- or oligomers may also be part of the formulation of the liquid precursor. Examples are the perfluoropolyether acrylate Sartomer CN 4001, available from Sartomer Company Inc, or the F-oligomer II, synthesized as detailed I the "List of materials used" below.

The liquid precursor of the (meth)acrylate based pressure sensitive preferably comprises one or more crosslinkers in an amount effective to optimize the cohesive or inner strength of the cured pressure sensitive adhesive. Useful crosslinkers for use in the liquid precursor of the (meth)acrylate based pressure sensitive include, for example, benzaldehyde, acetaldehyde, anthraquinone, various benzophenone-type and vinyl-halomethyl-s-triazine type compounds such as, for example, 2,4-bis(trichloromethyl)-6-(4-methoxyphenyl)-s-triazine. Preferred are polyacrylic-functional monomers such as, for example, trimethylolpropane triacrylate, pentaerythritol tetraacrylate, 1,2-ethylene glycol diacrylate, tripropyleneglycol diacrylate, 1,6-hexanediol diacrylate or 1,12-dodecanediol diacrylate. The compounds listed above, which can be substituted or unsubstituted, are intended to be illustrative and by no means limitative. Other useful crosslinkers which could be used are thermal crosslinkers. Exemplary thermal crosslinkers include: melamine, multifunctional aziridiens, multifunctional isocyanates, di-carbonic acids/carbonic acid anhydides, oxazoles, metalchelates, amines, carbodiimides, oxazolidones, and epoxy compounds. Hydroxyfunctional acrylates such as 4-hydroxybutyl(meth)acrylate or hydroxyethyl (meth)acrylate can be crosslinked, for example, with isocyanate or amine compounds.

Hydrolyzable, free-radically copolymerizable crosslinkers, such as monoethylenically unsaturated mono, di- and trialkoxy silane compounds including, but not limited to, methacryloxypropyltrimethoxysilane, vinyldimethylethoxysilane, vinylmethyldiethoxysilane, vinyltriethoxysilane, vinyltrimethoxysilane, vinyltriphenoxysilane, and the like are also useful crosslinking agents.

Aside from thermal, moisture or photosensitive crosslinking agents, crosslinking may achieve using high energy electromagnetic radiation such as gamma or e-beam radiation.

The crosslinking compounds are preferably present in an amount of 0.01 to 10 pph, in particular, between 0.01 and 5 pph and very specifically between 0.01 and 3 pph.

The liquid precursor of the (meth)acrylate based pressure sensitive preferably comprises one or more photoactivatable polymerization initiators such as, for example, benzoin ethers (e.g., benzoin methyl ether, benzoin isopropyl ether, substituted benzoin ethers such as anisoin methyl ether), acetophenones (e.g., 2,2-diethoxyacetophenone), substituted acetophenones such as 2,2-diethoxyacetophenone, 2,2-dimethoxy-2-phenyl-acetophenone, and 1-phenyl-2-hydroxy-2-methyl-1-propanone, substituted alpha-ketols (e.g., 2-methyl-2-hydroxy-propiophenone), aromatic sulphonyl chloride, and photoactive oximes such as 1-phenyl-1,1-propanedione-2-(O-ethoxycarbonyl) oxime and/or thermally activatable initiators such as, for example, organic peroxides (e.g., benzoyl peroxide and lauryl peroxide) and 2,2'-azo-bis(isobutyronitrile). The liquid precursor preferably comprises between 1-3 and, in particular, between 1-2 photonitiator compounds; especially preferred are liquid precursors comprising only one photoinitiator compound. The photoinitiator compounds are preferably present in an amount of 0.01 - 2.00 pph, in particular, between 0.05 - 1.00 pph and very specifically between 0.1 - 0.5 pph.

The liquid precursor of the (meth)acrylate based pressure sensitive may comprise other components and adjuvents such as tackifiers, plasticizers, reinforcing agents, dyes, pigments, light stabilizing additives, antioxidants, fibers, electrically and/or thermally conducting particles, fire retardants, surface additives (flow additives), rheology additives, nanoparticles, degassing additives, glass bubbles, polymeric bubbles, beads, hydrophobic or hydrophilic silica, calcium carbonate, blowing agents, reinforcing and toughening agents.

The liquid precursor of the (meth)acrylate based pressure sensitive is preferably prepared by adding part of the photoinitiator compounds to a monomer mixture comprising the alkyl (meth)acrylate monomers and the moderately polar and/or strongly polar monomers and partially polymerizing such mixture to a syrup of a coatable viscosity of, for example, 300 - 35,000 mPa·s (Brookfield, 25 °C). The viscosity of the resulting precursor is further adjusted by adding the other compounds such as crosslinker compounds, the remainder of the photoinitiator compounds, silicone (meth)acrylates and any additives and adjuvants as may be used. The viscosity of the resulting precursor can also be adjusted by adding a small amount of typically less than 5 pph of a polymeric additive such as, for example, reactive, photopolymerizable polyacrylates. The partial polymerization of the monomer mixture is preferably carried out with appropriate UV lamps having at a wavelength between 300 - 400 nm with a maximum at 351 nm at an intensity of preferably between about 0.1 to about 25 mW/cm$^2$. The exposure preferably is between 900-1,500 mJ/cm$^2$. The polymerization may be stopped either by removal of the UV and/or the introduction of, for example, radical scavenging oxygen. An example of a suitable UV-curing station is decribed in connection with the coating apparatus described in the Examples below.

Another preferred liquid precursor suitable in the present disclosure is UV-curable and comprises at least one ethylenically unsaturated compound comprising at least one urethane bond. Such compounds preferably are monomers or oligomers, and/or at least one of the ethylenically unsaturated groups preferably is a (meth)acrylate group. Such precursor can be polymerized to a polyurethane acrylate polymer, i. e. to a polymer comprising urethane bonds. Especially preferred is a liquid precursor comprising one or more mono- and/or multi(meth)acrylate functional monomer or oligomer compounds comprising at least one urethane bond, one or more monomer compounds comprising one or more ethylenically unsaturated groups but no urethane bond and one or more photoinitiators.

Mono- and multi- (meth)acrylate functional oligomers comprising at least one urethane bond are commercially available, for example, from Rahn AG, Zurich, Switzerland under the GENOMER trade designation. GENOMER 4188 is a mixture consisting of 80 wt. % of a monoacrylate-functional polyester based oligomer comprising at least one urethane bond, and 20 wt. % of 2-ethylhexylacrylate; the oligomer comprised by GENOMER 4188 has a weight average molecular weight $M_w$ of about 8,000 and the average acrylate functionality is 1 ± 0.1. GENOMER 4316 is an aliphatic trifunctional polyurethane acrylate characterized by a viscosity of 58,000 mPas at 25 °C and a glass transition temperature Tg 4 °C. GENOMER 4312 is an aliphatic trifunctional polyester urethane acrylate characterized by a viscosity of 50,000 - 70,000 mPas at 25 °C.

The mono- -or multi-(meth)acrylate functional oligomer compounds each have at least one, preferably at least 2 and more preferably at least 4 urethane bonds.

Mono- and multi-(meth)acrylate functional oligomers and their preparation are disclosed on p. 4, In. 24 - p. 12, In. 15 of WO2004/000,961 which passage is herewith incorporated by reference.

The amount of the one ore more mono- or multi-(meth)acrylate functional oligomers comprising at least one urethane bond with respect to the total mass of meth)acrylate functionalized monomers, oligomers and/or polymers with the exception of crosslinkers preferably is from 30 - 97.5 wt. % and more preferably from 45 - 95 wt. %.

The liquid precursor of the polyurethane polymer suitable in the present disclosure furthermore preferably comprises one or more monomer compounds comprising one or more ethylenically unsaturated group but no urethane bond. Examples of suitable ethylenically unsaturated groups include vinyl, vinylene, allyl and, in particular, (meth)acrylic groups. The amount of such compounds with one or more ethylenically unsaturated group total mass of meth)acrylate functionalized monomers, oligomers and/or polymers with the exception of crosslinkers preferably is from 2.5 - 70 wt. % and more preferably from 5 - 55 wt. % .

Compounds with one or more (meth)acrylic groups can preferably be selected from the poorly polar alkyl (meth)acrylate monomers, the moderately polar and/or strongly polar monomers and the two- or higher acrylic group functional crosslinkers disclosed above in connection with the liquid precursor of the acrylate-based pressure-sensitive adhesive.

The liquid precursor of the polyurethane polymer preferably comprises one or more (meth)acrylate monofunctional compounds having a glass transition temperature of the corresponding homopolymer of less than 10 °C. Preferred examples of such monomers include n-butyl acrylate, isobutyl acrylate, hexyl acrylate, 2-ethylhexyl acrylate, isooctyl acrylate, caprolactone acrylate, isodecyl acrylate, tridecyl acrylate, lauryl methacrylate, methoxy-polyethylenglycol-monomethacrylate, lauryl acrylate, tetrahydrofurfuryl acrylate, ethoxy-ethoxyethyl acrylate and ethoxylated-nonyl acrylate. Especially preferred are 2-ethylhexyl acrylate, isooctyl acrylate and tetrahydrofurfuryl acrylate.

The liquid precursor of the polyurethane polymer preferably comprises one or more (meth)acrylate monofunctional compounds having a glass transition temperature of the corresponding homopolymer of 50 °C or more. Preferred examples of such monomers include acrylic acid, N-vinylpyrrolidone, N-vinyl caprolactam, isobornyl acrylate, acryloylmorpholine, isobornyl methacrylate, phenoxyethyl acrylate, phenoxyethyl methacrylate, methylmethacrylate and acrylamide. Especially preferred areacrylic acid, isobornyl acrylate and N-vinyl caprolactam.

Examples of compounds with two or more ethylenically unsaturated groups which are suitable in the curable liquid precursor of the polymer comprised in the layer or layers of the multilayer film of the present disclosure include $C_2$ - $C_{12}$ hydrocarbondiol diacrylates such as 1,6-hexanediol diacrylate, $C_4$ - $C_{14}$ hydrocarbon divinylethers such as hexanediol divinylether and $C_3$ - $C_{12}$ hydrocarbontriol triacrylates such as trimethylolpropanetriacrylate. Two or higher acrylate functional monomers and, in particular, two- or three acrylate-functional monomers are preferred.

The liquid precursors described above are to exemplify the present disclosure without limiting it.

In another preferred embodiment, light-transmissive multilayer films according to the present disclosure comprise at least two superimposed polymer layers wherein one of the outer layers of the multilayer film comprises a polyurethane polymer and the opposite outer layer of the multilayer film comprises an adhesive and more preferably a (meth)acrylate based pressure-sensitive adhesive. Such multilayer film has a maximum wave-front aberration of a wavefront resulting from a planar wavefront of a wavelength of λ = 635 nm impinging normally on the top layer and transmitted through the multilayer film, measured as the peak-to-valley value of the transmitted wavefront, of less than 6 λ (= 3,810 nm).

The value of the maximum aberration of a planar wavefront measured subsequent to its transmission through a multilayer film of the present disclosure characterizes the distortion the wavefront experiences as a result of its interaction with the multilayer film. The lower the value of the maximum wavefront aberration the higher the optical quality of the film (e.g. less distortions of an image projected through the film).

The superimposed polymer layers each preferably have a transmission of at least 80% relative to visible light. The transmission of the polymer layers is measured according to the test method specified in the test section below for cured single precursor layers having a thickness of 300 μm each. The precursor layers used in the multilayer films of the present disclosure more preferably exhibit when present as a single 300 μm thick cured film a transmission of at least 90 % and especially preferably of at least 95%. The light-transmission of the multilayer film relative to visible light which results from the light transmission of the superimposed polymer layers preferably is at least 80%, more preferably at least 85% and especially preferably at least 90%. If desired the multilayer film may comprise light-transmissive solid films such as, for example, light-transmissive polymer films or webs.

The top liquid precursor layer is provided by a polyurethane polymer. The term polyurethane polymer as used above and below relates to cured polymers comprising at least one urethane bond which is typically formed by the reaction of isocyanate-functional and hydroxy-functional monomers. In the present disclosure the term polyurethane polymer preferably relates to a polymer obtainable by the polymerization of a liquid precursor comprising at least one ethylenically unsaturated compound comprising at least one urethane bond.

In the present disclosure the polyurethane polymer is preferably obtained by curing a liquid precursor comprising one or more mono- and/or poly(meth)acrylate functional oligomer compounds comprising at least one urethane bond, one or more monomer compounds comprising one or more ethylenically unsaturated groups but no urethane bond and one or more photoinitiators. Such preferred liquid precursor of a polyurethane polymer is decribed in detail above.

The outer layer of these preferred multilayer films opposite to the outer polyurethane layer preferably comprises a cured (meth)acrylate-based pressure-sensitive adhesive which is preferably obtained by curing the preferred liquid precursor of a corresponding pressure-sensitive adhesive disclosed above.

It was found by the present inventors that the multilayer film of the present disclosure comprising an outer layer comprising a polyurethane polymer and an opposite outer layer comprising an adhesive and, in particular, a (meth)acrylate based pressure-sensitive adhesive layer exhibits favorable optical properties such as, in particular, a low maximum aberration of a planar wavefront subsequent to its transmission through the cured multilayer film, a high transmission, a low haze and/or a low color shift as can be evaluated by the methods described in the test section below.

The outer layer of the multilayer film comprising a polyurethane polymer furthermore imparts advantageous mechanical properties such as a high scratch-resistance to the multilayer film as can be evaluated by the methods in the test section below.

## Detailed Description Of The Figures

*Fig. 1* depicts a coating apparatus 1 useful in the present disclosure. The coating apparatus 1 comprises a front wall 11, two intermediate walls 13 and a back wall 12 forming three coating chambers 16 (referenced by Roman figures II - IV). A rolling bead 17 (also referenced by Roman figure 1) is arranged upstream to the front wall 11. The walls 11, 12, 13 are formed by coating knives which are arranged normally to a substrate 2 moving in the downstream direction 3 so that gaps 100 are formed between the bottom portion of the coating knives 11, 12, 13 and the substrate. The coating chambers each have a width 101 and are filled with liquid precursors. A solid film 14 is applied via the upstream surface of the upstream intermediate wall 13 and introduced between the second and the third liquid precursor layers. A release film or liner 15 is applied via the upstream surface of the backwall 12 and attached on top of the top precursor layer. The coating stations formed by the rolling bead and the three downstream coating chambers are labelled by Roman reference number I, II, III and IV.

*Fig. 2a* is an enlarged representation of the coating knife which is used as a front wall 11, intermediate wall 13 and back wall 12 in the coating apparatus of Fig. 1. The coating knife has a bull-nose or radius type profile providing a transversely extending coating edge 18. *Fig. 2b* is an enlarged cross-sectional view of the bottom portion of the coating knife of Fig. 2a showing the bull-nose profile in more detail. The bull nose is represented by the circumference of a quadrant circle having a radius R.

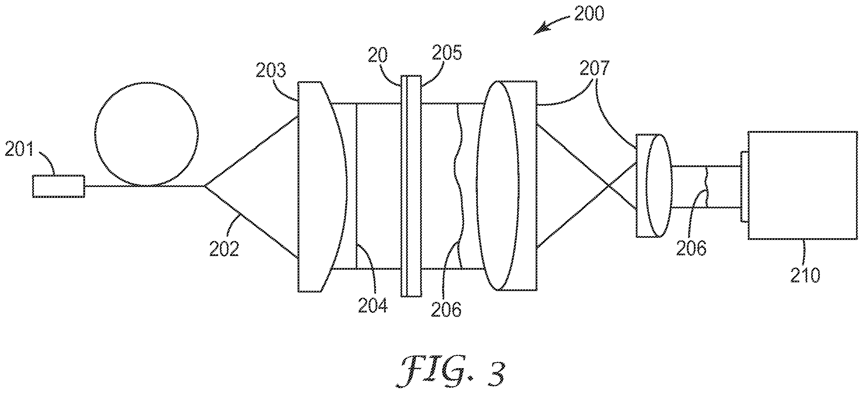

*Fig. 3* is a schematic representation of a measurement arrangement suitable for measuring the maximum wavefront aberration of a plane wavefront 204 transmitted through a cured multilayer film 20 mounted onto a glass plate 205. The light is provided by a fiber coupled laser diode 201 widened into a spherical wavefront 202 and collimated by an aspheric collimation lens 203. The plane wavefront 204 of the collimated light passes through the sample 20 and the glass plate 205 and is imaged on a Shack-Hartmann sensor 210 by a Kepler telescope 207. The Shack-Hartmann sensor determines the local slope of the optical wavefront using a microlens array and a CCD camera chip. The deformed wavefront is then reconstructed by the software of the Shack-Hartmann measuring device by numerical integration. The maximum wavefront aberration of a plane wavefront resulting from the multilayer film alone is obtained by deducting the value of the maximum wave front aberration of a plane wavefront measured for the glass plate alone.

*Figs. 4 - 8* are cross-sectional microphotographs of the cured multi-layer films prepared in Examples 2, 5, 11, 12 and 13, respectively. The figures are described in detail in the corresponding Example sections.

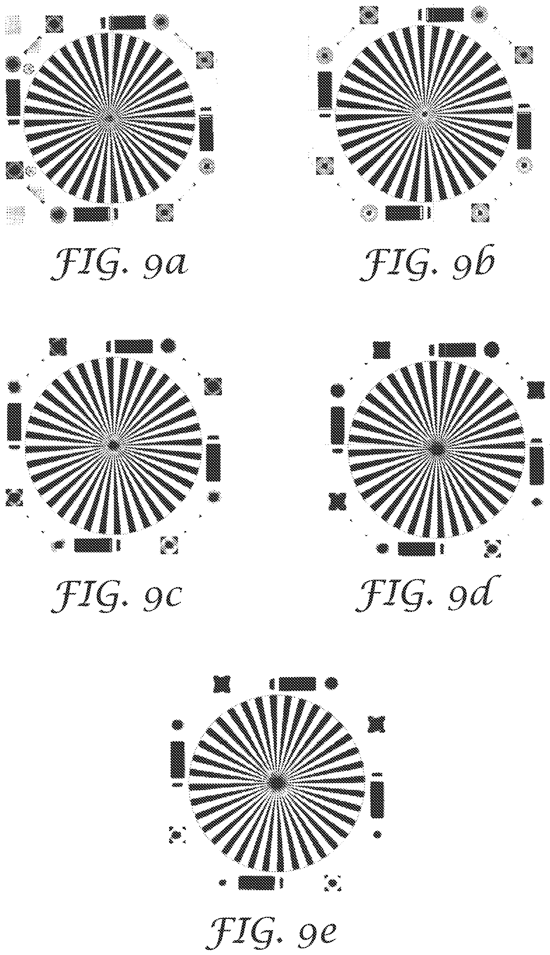

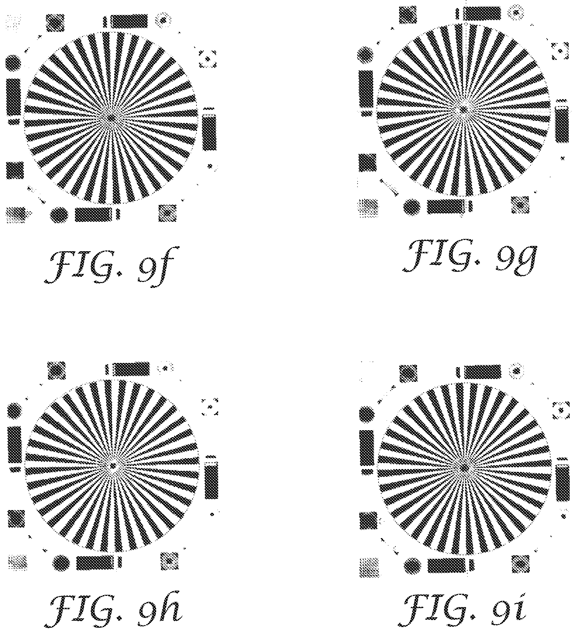

*Figs. 9a - 9i* are Siemens Star test images for the multilayer films of Examples 22 (Fig. 9b), 23 (Fig. 9f) and 24 (Fig. 9g), for the comparative, flexible and conformable 2-layer films comprising a polyurethane or polyethylene top layer and a pressure-sensitive adhesive bottom layer commercially available from 3M (Figs. 9c - 9e) and for Comparative Examples 2a and 2b (Figs. 9h and 9i). *Fig.* 9a is a Siemens Star test image for a glass plate used as a reference. The figures are explained in more detail in the Example section below.

*Fig. 10* is a schematic representation of a coating apparatus used in Comparative Example 2a.

## Examples

The present disclosure will be illustrated by the Examples described below. Prior to this, the coating apparatus used in the Examples and test methods which are used to characterize the liquid precursors and/or the cured multilayer films are described. Above and below concentrations are given as wt. % or as pph (parts per hundred resin). The term wt. % gives the mass of the (meth)acrylate functionalized monomers, oligomers or polymers, respectively, with the exception of crosslinker compounds with respect to the total mass of such (meth)acrylate functionalized monomers, oligomers and polymers with the exception of crosslinkers whereby such total mass is set as 100 wt. %. The amount of other compounds such as crosslinkers, initiators or additives such as fillers, polymer adds, tackifiers or plasticizers is given in parts by weight designated as pph (parts per hundred resin) relative to such total mass of 100 wt. %.

### *Coating Apparatus*

The coating apparatus used in the Examples is schematically shown in Fig. 1. The coating apparatus used in the Examples comprised up to four coating knives normally arranged with respect to the substrate moving beneath the coating apparatus in the downstream direction so that a rolling bead and up to 3 coating chambers, i.e. up to 4 coating stations including the rolling bead upstream to the first coating knife could be used which are also denoted in Fig. 1 by consecutive Roman reference numbers I, II, III and IV beginning with said upstream rolling bead labeled by reference number I. If less than 4 coating chambers or coating stations were used the corresponding number of downstream coating knives not used was removed. For example, in case of a two-layer film, the two most downstream coating knives were removed so that only the rolling bead I and the first coating chamber II were present; if a release liner 15 was attached to the exposed surface of the top layer it was fed in such case via the upstream surface of the most downstream coating knife, i.e. the downstream coating knife of chamber II. The coating knives were held by transverse carrier elements rigidly mounted to two longitudinal carrier elements extending in the downstream direction. The transverse carrier elements were extending normal to the downstream direction.

The width of the three coating chambers II - IV in the downstream direction could be varied as follows:

| Coating station | Range of width in downstream direction [mm] | Range of volumes [ml] of coating chambers |
|---|---|---|
| II | 4-157 | 26-1005 |
| III | 4-157 | 26-1005 |
| IV | 4-157 | 26-1005 |

The coating chambers were bordered in the direction normal to the downstream direction by the front wall and the first intermediate wall (coating station II), by the 1st and 2nd intermediate walls (coating station III) and by the 2nd intermediate wall and the back wall (coating station IV). The coating chambers were bordered in the downstream direction by two side scrapers made from PTFE bars which were arranged normal to the coating knives. The height of the coating chambers as measured from the surface of the substrate to the exposed upper surface of the transverse carrier elements was about 40 mm for each of the three coating chambers providing the volumes of the coating chambers as listed in the table above.

The coating knives were each made from 8 mm thick rigid aluminum plates having a bull nose type profile which is shown in Figs. 2a and 2b. The profiles of all four coating knives were identical. The bull nose was represented by the circumference of a quadrant circle having a radius of 5 mm. The gap width of the respective coating knife relative to the surface of the substrate could be adjusted free of clearance by pre-loaded screws that were supported by the transverse carrier elements.

The gap width between the transversely extending edge of the respective coating knife and the substrate of the surface could be varied as follows:

| Coating knife | Range of gap with [$\mu$m] |
|---|---|
| Front wall | 0 - 5,000 |
| 1st intermediate wall | 0 - 5,000 |
| 2nd intermediate all | 0 - 5,000 |
| Back wall | 0 - 5,000 |

The substrate was unwound from a winder and moved beneath the coating apparatus with a downstream speed which could be varied between 0.01 m/min and 6 m/min. The substrate was tensioned by tension controlled unwinding rollers, and two rollers arranged after the curing station transported the cured film.

The coating apparatus was furthermore equipped so that a release liner, upon unwinding from a winder, could be guided by the upstream surface of the back wall coating knife and attached via the bull nose profile of the coating knife directly onto the exposed surface of the topmost liquid precursor layer of the stack of layers. This is schematically shown in Fig 1.

The coating apparatus was furthermore equipped so that a backing, upon unwinding from a winder, could be guided by the upstream surface of the front wall or the 1st or 2nd intermediate wall, respectively, and attached via the corresponding bull nose profiled edge of the coating knife directly onto the respective liquid precursor layer applied via such intermediate wall coating knife. The backing formed an integral part of the multilayer film upon curing.

The stack of liquid precursor layers thus prepared was subsequently passed by a UV-curing station having a length of 3 m. Curing was effected both from the top, i. e. in a direction towards the exposed liquid precursor layer optionally covered with a release liner and from the bottom, i.e. in a direction towards the substrate whereby the intensities provided in both directions were set at equal levels. The radiation was provided by fluorescent lamps at a wavelength between 300 - 400 nm with a maximum at 351 nm. The total radiation intensity irradiated cumulatively from top and bottom and the respective length of the two coating zones was as follows:

|  | Zone 1 (length 200 cm) | Zone 2 (length 100 cm) |
|---|---|---|
| Total intensity [mW/cm$^2$] | 2.07 | 4.27 |

## Test Methods Used

### Brookfield Viscosity

The viscosity of the liquid precursors was measured at 25 °C according to DIN EN ISO 2555:1999 using a Brookfield Digital Viscosimeter DV-II commercially available from Brookfield Engineering Laboratories, Inc.

### 90° Peel Adhesion

A sample of a cured multilayer film comprising two layers and having dimensions of 12.7 mm wide by 200 mm long was provided. One of the layers was a pressure-sensitive adhesive layer covered with a release liner, and the other layer was a non-sticky polyurethane polymer layer. Both multilayer films prepared according to the method of the present disclosure and comparative multilayer films obtained by lamination of the individual layer were tested.

The release liner was removed from the pressure-sensitive adhesive layer and the multilayer film was attached through its exposed adhesive surface onto a clean glass plate using light finger pressure. Before applying the multilayer film, the glass plate was wiped three times with methyl ethyl ketone and once with heptan. The multilayer film was rolled twice in each direction with a standard FINAT test roller (6.8 kg) at a speed of approximately 10 mm/s. After applying the multilayer to the glass surface the resulting assembly was held for a period of 24 hr. at ambient conditions before testing. The peel adhesion was then measured using a tensile testing apparatus (Model Z020 from Zwick GmbH, Ulm, Germany) at a peel speed of 300 mm/min. The test plate was grasped in one movable jar for 90° peel tests of the tensile tester. The sample multilayer film was folded back at an angle of 90° and its free end grasped in the upper jaw of the tensile tester in a configuration commonly utilized for 90° measurements. Three samples were measured and the results averaged. The results are reported in N/12.7 mm.

### T-Peel Strength

A sample of a multilayer film comprising two layers and having dimensions of 12.7 mm wide by 200 mm long was provided. One of the layers was a pressure-sensitive adhesive layer covered with a release liner, and the other layer was a non-sticky polyurethane polymer layer. Both multilayer films prepared according to the method of the present disclosure and comparative multilayer films obtained by lamination of the individual layers were tested.

3M double-sided pressure-sensitive adhesive tape 444 was attached to the non-sticky surface of the polyurethane based polymer layer of the multilayer film. The release liner was removed from the pressure-sensitive adhesive layer of the multilayer film and the resulting assembled laminate film was placed between two strips of anodized aluminum using light finger pressure and leaving two 25 mm long free aluminum tabs at the end of each aluminum strip. The resulting assembled laminate film was rolled twice in each direction with a standard FINAT test roller (6.8 kg) at a speed of approximately 300 mm/min. The samples were held for 24 hr. at ambient conditions before testing. The free aluminum tabs were bent back at 90° in opposite directions and respectively clamped in the upper and lower jaws of a tensile testing apparatus (Model Z020 from Zwick GmbH, Ulm, Germany) and separated at a peel speed of 300 mm/min. Three samples were measured and the results averaged. The results are reported in N/12.7 mm.

### Optical Properties Of The Multilayer Films

### Sample Preparation:

A sample of a multilayer film comprising two layers and having dimensions of 6 cm wide by 6 cm long was provided. One of the layers was a pressure-sensitive adhesive layer covered with a release liner, and the other layer was a non-sticky polyurethane polymer layer. Both the multilayer films prepared according to the method of the present disclosure and comparative commercially available from 3M as indicated below were tested.

The release liner was removed from the pressure-sensitive adhesive layer of the multilayer films. The exposed pressure-sensitive adhesive surface of the multilayer film was rinsed with water to reduce initial adhesion and to ensure defect free lamination of the film through its adhesive surface to a clean 2 mm thick clear float glass plate obtainable from Saint-Gobain Glass Deutschland GmbH, Germany. After wet lamination, remaining water was carefully removed with a lint free cloth and the samples were stored for at least 16 h at room temperature to dry completely.

### a) Transmission, transmission loss, absorption, haze, clarity, lightness and colour shift of multilaver films and reflection from the surface of the topmost exposed cured layer of the multilayer film.

The samples of a multilayer film laminated onto glass were placed on the sample holder of the HunterLab UltraScan XE measuring system, commercially available from Hunter Associates Laboratory, Inc., Reston, VA, USA. The samples were evaluated with an integrating sphere ("Ulbricht-Kugel") using a D65 light source and an observation angle of 2°. The 2 mm thick glass plate specified above was used without the multilayer film as a reference.

The color coordinates of the multilayer film were measured according to test method CIE 1931 and reported in terms of Y, x, y-values. The Y value correlates with the lightness of the film. The color shift relative to the reference glass plate was evaluated in terms of dx and dy values, respectively, representing the difference of the x and y values of the multilayer film with respect to the x and y values of the plain glass plate.

The transmission is defined as the ratio of the intensity of the light coming out of the multilayer film over the intensity of the impinging light. The transmission was measured as the total transmission which is a combination of regular and diffuse transmission. The measurement was conducted according to ASTM E 1438. The transmission loss is defined as the difference between the intensity of the impinging light and the intensity of the light coming out of the multilayer film. The transmission and the transmission loss are reported in %.

The absorption is the ratio of the difference between the incident intensity and the transmitted intensity over the incident intensity. The absorption and the transmission add up to 1. The absorption is reported in %.

The reflection was measured as the total reflection which is a combination of diffuse and specular reflection. The measurement was conducted as is described in DIN 5036, part 3.

The haze was measured in the transmissive mode according to ASTM D-1003-95. The haze is defined as the ratio of the diffuse transmission over the total transmission.

The clarity was measured in the transmissive mode according to ASTM D-1003 and D-1044.

### b) Refractive index of the cured multilayer film and cured single precursor layers

The refractive index of cured single precursor layers was measured according to ISO 489 using an Abbé refractometer at a wavelength of 589 nm and a temperature of 23 °C.

### c) Optical quality of the multilayer film

### (i) Siemens Star test

A printed Siemens Star with 36 black and 36 white sectors and a diameter of 144 mm was fixed on a vertical wall. A digital photo camera, Canon EOS 450 D, obtainable from Canon Deutschland GmbH, Krefeld, Germany, was placed in front of the Siemens Star with a distance of 1000 mm between lens and Siemens Star. A multilayer film sample laminated on glass was then placed between camera and Siemens Star, with a distance of 750 mm to the Siemens Star and 250 mm to the camera lens, respectively. The Siemens Star and the sample were oriented normal to and centered to the optical axis of the camera.

The focal length of the camera was set to 55 mm with an aperture of 5,6. The camera was set to highest resolution mode, the sensitivity to ISO 100. Lighting conditions were adjusted accordingly to allow for a well exposed digital image.

An imaging device may not perfectly reflect the pattern with alternating white and black sectors of the Siemens Star. Beginning in the middle of the pattern, a fuzzy zone occurs, the so-called grey ring, where the black and white sectors could not be distinguished. The size of the grey ring was used to determine the optical quality of the films.

The digital picture was modified with a picture editing program or presentation program like Microsoft Power-Point. Here, the contrast of the picture was set to 100 % resulting in a black and white picture. At the centre a uniform black or white circular area occurs. A qualitative evaluation of the digital pictures is based on the fact that the larger the diameter of this circle the worse the resolution is.

For a quantitative evaluation a thin circle-line has to be positioned within the picture to measure the resulting black or white circle (grey ring). Then the brightness level is adjusted such that the diameter of the white or black circle (which does not resolve the lines) is minimal. If the area is not exactly a circle, the line must be positioned such that it represents the mean of most sectors of the Siemens Star. This circle line represents the grey ring (inner circle of the Siemens Star). The diameter of the small circle was looked up in the software and was recorded as "d". A second circle line was positioned along the outer perimeter of the Siemens Star. The diameter of this circle was measured and recorded as "D". The diameter of the printed Siemens star of 144 mm was used as reference value "D_real".

The resolving power of a given optical system could be characterized by the spatial frequency of an object detail that still could be resolved. Commonly, the spatial frequency is described as the number of black and white line pairs per mm (lp/mm) that could be distinguished by the optical system. The spatial frequency of the Siemens Star used with n = 36 pairs of black and white sectors is 0.08 lp/mm at the outer perimeter and increasing to inifinite lp/mm in the centre.

The resolving power r in lp/mm for the measurements of the samples could be calculated as follows:

$$r = (n * D)/(d * D\_real * \pi)$$

The higher the spatial frequency evaluated for the resolving power r, the more details of an object could be resolved and the better the performance of the tested sample.

### (ii) *Measuring of wavefront deformation*

The deformation of an optical wavefront caused by a multilayer film obtained by the method of the present disclosure or by comparative multilayer films, respectively, was measured with an optical analysis system comprising a Shack-Hartmann Sensor (SHS). The multilayer film samples laminated onto glass were prepared as described in the Sample Preparation section above and placed on the sample holder of the SHSInspect-TL-SHR-2" optical testing system, commercially available from optocraft GmbH, Erlangen, Germany. The sample is illuminated with light of 635 nm wavelength provided by a fibre coupled laser diode and collimated by a high accuracy aspheric collimation lens. The plane wavefront of the collimated light passes through the sample and is imaged on the Shack-Hartmann sensor by a Kepler-telescope. The sample is located in the focal plane of the Kepler-telescope so that deformations of the optical wavefront induced by the sample are imaged on the Shack-Hartmann sensor. The Shack-Hartmann sensor determines the local slope of the optical wavefront using a micro-lens array and a CCD camera chip. The software of the measuring system then reconstructed the deformed wavefront by integration. The optical quality of the samples was characterized by the maximum deformation of the wavefront, recorded as the "peak-to-valley value" of the deformed wavefront for an evaluated diameter of 30 mm and measured in multiples of the used wavelength. The lower the value of the maximum wavefront aberration the higher the optical quality of the film (e.g. less distortions of an image projected through the film).

The wavefront sensor system was operated under the following conditions:

| Max. diameter of surface area evaluated: | up to 53 mm |
|---|---|
| Diameter of surface evaluated | 30 mm |
| Light source: | $\lambda$ = 635 nm, coupled to single-mode fiber |
| SHSCAM: | SHR-150, lateral resolution: 78x59 microlenses |
| Illumination: | plane wave illumination with auxiliary collimation lens |

### d) Mechanical quality of the exposed surface of the topmost cured layer of the multilayer film

### Sample Preparation

A sample of a multilayer film comprising two layers and having dimensions of 4 cm wide by 15 cm long was provided. One of the layers was a pressure-sensitive adhesive layer covered with a release liner, and the other layer was a non-sticky polyurethane polymer layer. The release liner applied to the surface of the adhesive layer was removed and the sample was attached to a 3 mm thick glass substrate.

### (i) Measurement of the abrasion resistance

A 2.54 cm x 2.54 cm large pad of steel wool of the grade # 0000 available from hutproducts.com under the designation "113-Magic Sand" was laminated onto a 300 g steel block having a square cross-section 2.54 cm x 2.54 cm wide and a height of 6 cm. The block was laterally moved over the test sample without exerting any additional normal force by hand. One forth-and-back movement was counted as one cycle. It was measured after how many cycles first slight irreversible scratches appeared on the exposed surface of the test samples.

### (ii) Pencil hardness (Ericson test)

Pencils of different hardness are sharpened and are written - with normal hand pressure - on the exposed surface of the test sample. Pencils having a hardness of 6B (the softest) to 9H (the hardest) were employed starting with the softest.

The test consists in defining the hardest pencil which does not leave irreversible traces on the exposed surface of the topmost cured layer.

### List Of Materials Used

GENOMER 4316, aliphatic trifunctional polyurethane acrylate, viscosity (mPas) 58,000 at 25 °C, Tg 4 °C, commercially available from Rahn AG, Zurich, Switzerland.

GENOMER 4312, aliphatic trifunctional aliphatic polyester urethane acrylate, viscosity (mPas) 50,000 - 70,000 at 25°C, commercially available from Rahn AG, Zurich, Switzerland.

MAUS oligomer, alpha, omega-dimethacryloxyurea-polydimethylsiloxane, $M_w \sim 14.000$, prepared as described in WO 92/16,593, p.26 (where it is referred to as 35K MAUS).

SR 285, tetrahydrofurfuryl acrylate (THF-acrylate), commercially available from Cray Valley, Paris, France.

Isooctyl acrylate (IOA), ester of isooctylalcohl and acrylic acid, commercially available from Sartomer Company (CRAY VALLEY), France.

Acrylic acid (AA), commercially available from BASF AG, Germany.

2-Ethylhexyl acrylate (2-EHA), commercially available from BASF AG, Germany.

SR506D, isobornyl acrylate (IBA), monofunctional acrylic monomer with a high Tg of 66 °C, commercially available from Sartomer Company (CRAY VALLEY), France.

1,6-Hexanediol diacrylate (HDDA), fast curing diacrylate monomer, commercially available form Sartomer (CRAY VALLEY), France.

Sartomer SR399LV, low viscosity dipentaerythritol pentaacrylate, commercially available from Sartomer Company (CRAY VALLEY), France.

SR306, tripropyleneglycol diacrylate (TPGDA), commercially available from Sartomer Company (CRAY VALLEY), France..

F-oligomer II is a heptafluoropropyleneoxide (HFPO) containing oligomer. For the preparation 0,075 eq of (HFPO)-alc, [(F(CF(CF$_3$)CF$_2$O)$_{6,85}$-CF(CF$_3$)CF$_2$(O)NH CH$_2$CH$_2$OH, synthesized following the procedure of WO 2007/124,263, pp. 19 - 21, "2. Synthesis of Intermediates"], 0,5 eq of Tolonate HDB, a HMDI biuret available from Rhodia, and 0,425 eq of Sartomer SR 344, pentaerythritol triacrylate available from Sartomer Company, are reacted following the procedure as described in WO 2007/124,263, p. 23, Example 19.

DAROCUR 1173, 2,2-dimethyl-2-hydroxy acetophenone, commercialy available from Ciba Specialty Chemicals, Basel, Switzerland.

Omnirad BDK, 2,2-dimethoxy-2-phenylacetophenone (UV-initiator), commercially available from iGm resins, Waalwijk, The Netherlands.

Tego Rad 2100, silicone acrylate, commercially available from Evonik Tego Chemie GmbH, Germany.

Irgacure 500, 1:1 mixture by weight of 50 % 1-hydroxy-cyclohexyl-phenyl-ketone and 50 % of benzophenone , liquid photoinitiator, commercially available from Ciba Specialty Chemicals, Basel, Switzerland.

VAZPIA, acrylamidoacetyl photoinitiator, prepared as described in US 5,506,279, col. 14, Example 1.

ORASOL RED 2B red color, commercially available from Ciba Specialty Chemicals, Basel, Switzerland.

EPODYE YELLOW, powdered fluorochrome, commercially available from Struers, Germany.

### *List Of Curable Liquid Precursors Used*

### *Liquid Precursor I*

94.95 wt. % of GENOMER 4316 and 5.05 % wt. % of THF-acrylate were combined in a glass vessel and mixed for 30 min. Then 1 pph of DAROCUR 1173 and 0.05 pph of Orasol Red B2 were added and the resulting mixture was stirred for 1 hour to provide liquid precursor I.

The composition of liquid precursor I and its Brookfield viscosity as determined by the test method described above are summarized in Table 1.

### *Liquid Precursor II*

94.95 wt. % of GENOMER 4312 and 5.05 % wt. % of THF-acrylate were combined in a glass vessel and mixed for 30 min. Then 1 pph of DAROCUR 1173 was added and the resulting mixture was stirred for 1 hour to provide liquid precursor II.

The composition of liquid precursor II and its Brookfield viscosity as determined by the test method described above are summarized in Table 1.

### *Liquid Precursor III*

69.7 wt. % of GENOMER 4316 and 30.3 wt. % of THF-acrylate were combined in a glass vessel and mixed for 30 min. Then 1 pph of DAROCUR 1173 and 0.05 pph of Epody Yellow were added and the resulting mixture was stirred for 1 hour to provide liquid precursor III.

The composition of liquid precursor III and its Brookfield viscosity as determined by the test method described above are summarized in Table 1.

### *Liquid Precursor IV*

90 wt. % of isooctyl acrylate and 10 wt. % of acrylic acid were combined with 0.04 pph of Omnirad BDK as a photoinitiator in a glass vessel and stirred for 30 minutes. The mixture was partially polymerized under a nitrogen-rich atmosphere by UV radiation to a degree of polymerization of appr. 8 % and a Brookfield viscosity of 3,200 mPas at 25 °C. Subsequent to the curing 0.12 pph of 1,6-hexanediol diacrylate as a crosslinker and 0.16 pph of Omnirad BDK as a photoinitiator were added and the resulting mixture was thoroughly stirred for 30 min. to provide liquid precursor IV.

The composition of liquid precursor IV and its Brookfield viscosity as determined by the test method described above are summarized in Table 1.

### *Liquid Precursor V*

84 wt. % of isooctyl acrylate, 15 wt. % of isobornyl acrylate, 1 wt. % of acrylic acid were combined with 0.02 pph of VAZPIA as a photoinitiator in a glass vessel and stirred for 30 minutes. The mixture was partially polymerized under a nitrogen-rich atmosphere by UV radiation to a degree of polymerization of appr. 8 % and a Brookfield viscosity of 4,720 mPa·s at 25 °C. Subsequent to the curing 0.05 pph of 1,6-hexanediol diacrylate as a crosslinker and 0.1 pph Omnirad BDK as a photoinitiator were added and the resulting mixture was thoroughly stirred for 30 min. to provide liquid precursor V.

The composition of liquid precursor V and its Brookfield viscosity as determined by the test method described above are summarized in Table 1.

### *Liquid Precursor VI*

89.3 wt. % of liquid precursor V was combined with 10.7 wt. % of MAUS oligomer and 0.25 pph of HDDA as a crosslinker in a glass vessel and stirred for 30 minutes to provide liquid precursor VI.

The composition of liquid precursor VI and its Brookfield viscosity as determined by the test method described above are summarized in Table 1.

### Liquid Precursor VII

76,1 wt. % of SR 399LV, 19,1 wt. % of TPGDA, 1,9 wt. % of F-oligomer II and 2,9 wt. % of Irgacure 500 were combined in a glass vessel and stirred for 30 minutes to provide liquid precursor VII.

The composition of liquid precursor VII and its Brookfield viscosity as determined by the test method described above are summarized in Table 1.

### Liquid Precursor VIII

84 wt. % of IOA, 15 wt. % of IBA and 1 wt. % of AA were combined with 0.2 pph of VAZPIA as a photoinitiator in a glass vessel and stirred for 30 minutes. The mixture was polymerized by UV radiation to a degree of polymerization of appr. 8 % and a Brookfield viscosity of 12,020 mPa·s at 25 °C. Subsequent to the curing 0.05 pph of 1,6-hexanediol diacrylate as a crosslinker and 0.1 pph of Omnirad BDK as a photoinitiator were added and the resulting mixture was thoroughly stirred for 30 minutes to provide liquid precursor VIII.

The composition of liquid precursor VIII and its Brookfield viscosity as determined by the test method described above are summarized in Table 1.

### Liquid Precursor IX

89.3 wt. % of liquid precursor VII was combined with 10.7 wt. % of MAUS oligomer, 0.25 pph of HDDA as a crosslinker in a glass vessel and stirred for 30 minutes to provide liquid precursor IX.

The composition of liquid precursor IX and its Brookfield viscosity as determined by the test method described above are summarized in Table 1.

### Liquid Precursor X

94.24 wt. % of GENOMER 4316 and 5.76 % wt. % of THF-acrylate were combined in a glass vessel and mixed for 30 min. Then 0.25 pph of DAROCUR 1173 was added and the resulting mixture was stirred for 1 hour to provide liquid precursor X.

The composition of liquid precursor X and its Brookfield viscosity as determined by the test method described above are summarized in Table 1.

### Liquid Precursor XI

94.57 wt. % of GENOMER 4316 and 5.43 wt. % of THF-acrylate were combined in a glass vessel and mixed for 30 min. Then 0.6 pph of DAROCUR 1173 was added and the resulting mixture was stirred for 1 hour to provide liquid precursor XI.

The composition of liquid precursor XI and its Brookfield viscosity as determined by the test method described above are summarized in Table 1.

### Liquid Precursor XII

87.5 wt. % of IOA and 12.5 wt. % of AA were combined with 0.04 pph of Omnirad BDK as photoinitiator in a glass vessel and stirred for 30 minutes. The mixture was partially polymerized under a nitrogen-rich atmosphere by UV radiation to a degree of polymerization of appr. 8 % and a Brookfield viscosity of 4,120 mPa·s at 25 °C. Subsequent to the curing 0.12 pph of HDDA as a crosslinker, 0.16 pph of Omnirad BDK as photoinitiator and 5 pph of Tego Rad 2100 were added and the resulting mixture was thoroughly stirred for 30 minutes to provide liquid precursor XII.

The composition of liquid precursor XII and its Brookfield viscosity as determined by the test method described above are summarized in Table 1.

### Liquid Precursor XIII

87.5 wt. % of isooctyl acrylate and 12.5 wt. % of acrylic acid were combined with 0.04 pph of Omnirad BDK as a photoinitiator in a glass vessel and stirred for 30 minutes. The mixture was partially polymerized under a nitrogen-rich atmosphere by UV radiation to a degree of polymerization of appr. 8 % and a Brookfield viscosity of 4,100 mPa·s at 25 °C. Subsequent to the curing 0.1 pph of 1,6-hexanediol diacrylate as a crosslinker and 0.16 pph of Omnirad BDK as a photoinitiator were added and the resulting mixture was thoroughly stirred for 30 min. to provide liquid precursor XIII.

The composition of liquid precursor XIII and its Brookfield viscosity as determined by the test method described above are summarized in Table 1.

**Table 1**

| Precursor | Composition | Brookfield viscosity |
|---|---|---|
| I | 94.05 wt. % of GENOMER 4316<br>5.05 wt. % of THF-acrylate<br>1 pph of Darocur 1173<br>0.05 pph of Orasol Red B2 | 24,900 mPas |
| II | 94.05 wt. % of GENOMER 4312<br>5.05 wt. % of THF-acrylate<br>1 pph of Darocur 1173 | 19,900 mPas |
| III | 69.7 wt. % of GENOMER 4316<br>30.3 wt. % of THF-acrylate<br>1 pph of Darocur 1173<br>0.05 pph of Epodye Yellow | 1,650 mPas |
| IV | 90 wt. % of IOA<br>10 wt. % of acrylic acid<br>0.12 pph of HDDA<br>0.2 pph Omnirad BDK | 3,200 mPas |
| V | 84 wt. % of IOA<br>15 wt. % of IBOA<br>1.0 wt. % of acrylic acid<br>0.05 pph of HDDA<br>0.1 pph of Omnirad BDK<br>0.2 pph of VAZPIA | 4,720 mPas |
| VI | 89.3 wt. % of liquidLiquid precursor V<br>10.7 wt. % of MAUS oligomer<br>0.25 pph of HDDA | 3,380 mPas |
| VII | 76,1 wt. % of SR399LV<br>19,1 wt. % of TPGDA<br>1,9 wt. % of F-oligomer II<br>2,9 wt. % of Irgacure 500 | 480 mPas |
| VIII | 84 wt. % of IOA<br>15 wt. % of IBA<br>1.0 wt. % of acrylic acid<br>0.05 pph of HDDA<br>0.1 pph of Omnirad BDK<br>0.2 pph of VAZPIA | 12,020 mPas |
| IX | 89.3 wt. % of liquidLiquid precursor V<br>10.7 wt. % of MAUS oligomer<br>0.15 pph of HDDA | 3,350 mPas |
| X | 94.24 wt. % of GENOMER 4316<br>5.76 wt. % of THF-acrylate<br>0.25 pph of Darocur 1173 | 24,800 mPas |
| XI | 94.38 wt. % of GENOMER 4316<br>5.42 wt. % of THF-acrylate<br>0.60 pph of Darocur 1173 | 25,000 mPas |
| XII | 87.5 wt. % of IOA | 4,120 mPas |

(continued)

| Precursor | Composition | Brookfield viscosity |
|---|---|---|
|  | 12.5 wt. % of acrylic acid<br>0.12 pph of HDDA<br>0.2 pph of Omnirad BDK<br>5 pph of Tego Rad 2100 |  |
| XIII | 87.5 wt. % of IOA<br>12.5 wt. % of acrylic acid<br>0.1 pph of HDDA<br>0.2 pph of Omnirad BDK | 4,100 mPas |

### Examples 1 - 4

A coating apparatus comprising two coating stations I and II as described above and schematically shown in Fig. 1 was used. Release liner Hostaphan 2SLK, 75 $\mu$m, Mitsubishi was used as a substrate and the downstream speed was varied as is indicated in Table 2 below. The front wall and the back wall were each formed by coating knives each having a bull nose profiled bottom portion and dimensions as is described above. The width of the coating chamber (coating station II) in downstream direction and the gaps between the transversely extending edge of the coating knives and the surface of the substrate are indicated in Table 2 below.

Liquid precursor I was metered in front of the upstream side of the front wall as rolling bead I and liquid precursor III was filled into the coating chamber. Subsequent to the formation of the stack of the two liquid precursor layers, a release liner Hostaphan 2SLK, 75 $\mu$m, Mitsubishi was applied onto the exposed surface of the layer of liquid precursor III via the upstream surface of the back wall coating knife. The release liner used as a substrate remained attached to the bottom layer.

The stack of the two liquid precursor layers between the two release liners was cured by passing it along the UV-curing station described in the coating apparatus above to provide the multilayer film comprising two polyurethane layers.

Subsequent to curing, the two release liners attached to the exposed surfaces of the multilayer film were removed and the thicknesses of the cured polyurethane layers were evaluated by taking microphotographs of cross-sections of the multilayer films. The cross-sections were obtained by freezing the samples in liquid nitrogen and breaking them (cryo fracture) and the microphotographs were taken using a light microscope (LM), Reichert Jung, Polyvar MET. Settings of equipment:

Polyvar MET:        incident/transmitted light dark/bright field
Magnification:        100x

A microphotograph of a cross-section of the multilayer film of Example 2 is shown in Fig. 4. The microphotograph shows the multilayer film comprising 2 layers which are attached to a sample holder. The bottom layer attached to the sample holder is the red colored polyurethane layer obtained from liquid precursor I, and the upper layer is the cured liquid precursor III. The dark area below the multilayer film is caused by the sample holder. It can be taken from Fig. 2 that the two layers are clearly and sharply separated from each other indicating that essentially no mixing occurs at the interface between the two polyurethane layers. The thickness value of the cured polyurethane layers is reported in Table 2 below. The clear layer on the top of the picture appears slightly red in some areas due to reflections of the light passing through the red layer. Changing the direction of illumination moves this effect to different locations in the picture.

**Table 2**

| Example | Downstream Speed [m/min] | Coating Station I | | | Coating Station II | | | Multilayer film | |
|---|---|---|---|---|---|---|---|---|---|
| | | Liquid Precursor | Downstream width of coating chamber [mm] | Gap [μm] | Liquid Precursor | Downstream width of coating chamber [mm] | Gap [μm] | Thickness of bottom layer [μm] | Thickness of top layer [μm] |
| 1) | 0.75 | I | rolling bead | 200 | III | 10 | 300 | 152 | 88 |
| 2 | 1.5 | I | rolling bead | 200 | III | 10 | 300 | 102 | 163 |
| 3 | 3 | I | rolling bead | 200 | III | 10 | 300 | 102 | 182 |
| 4 | 6 | I | rolling bead | 200 | III | 10 | 300 | 110 | 197 |

## *Examples 5 - 11*

A coating apparatus comprising two coating stations I and II as described above and schematically shown in Fig. 1 was used. Release liner Hostaphan 2SLK, 75 $\mu$m, Mitsubishi was used as a substrate, and the downstream speed was varied as is indicated in Table 3 below. The front wall and the back wall were each formed by coating knives each having a bull nose profiled bottom portion and dimensions as is described above. The width of the coating chamber (coating station II) in downstream direction and the gaps between the bottom portion of the coating knives and the surface of the substrate are indicated in Table 3 below.

Liquid precursor I or III, respectively, was metered in front of the upstream side of the front wall as rolling bead (coating station I) and liquid precursor IV was filled into coating station II. Subsequent to the formation of the stack of the two liquid precursor layers, a release liner Hostaphan 2SLK, 75 $\mu$m, Mitsubishi was applied onto the exposed surface of the layer of liquid precursor IV via the upstream wall of the back wall coating knife. The release liner used as a substrate remained attached to the bottom layer.

The stack of the two liquid precursor layers between the two release liners was cured by passing it along the UV-curing station described in the coating apparatus above to provide the multilayer film comprising a bottom polyurethane layer and a top pressure-sensitive adhesive layer.

Subsequent to curing the two release liners applied to the top exposed urethane layer and the bottom pressure-sensitive adhesive layer were removed and the thicknesses of the cured polyurethane and pressure-sensitive adhesive layers, respectively, were evaluated by taking microphotographs of cross-sections of the multilayer films. The cross-sections were obtained by freezing the samples in liquid nitrogen and breaking them (cryo fracture) and the microphotographs were taken using a light microscope (LM), Reichert Jung, Polyvar MET. Settings of equipment:

Polyvar MET:    incident/transmitted light dark/bright field
Magnification:    100x

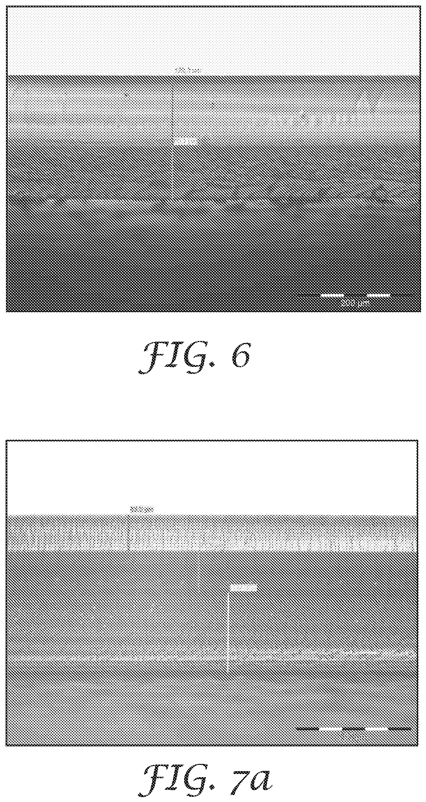

Cross-sectional microphotographs of the multilayer films of Examples 5 and 11 are shown in Figs. 5 and 6. The multilayer films of Example 5 and 11 each comprise 2 layers whereby the lower layer is attached in each case to a sample holder.

In the microphotograph of Fig. 5 (Example 5), the bottom layer of the multilayer film is the cured pressure-sensitive adhesive layer whereas the exposed top layer is the cured polyurethane layer. The clear layer of pressure-sensitive adhesive appears slightly red or yellow in some areas due to reflections of the light passing through the colored polyurethane layer. Changing the direction of illumination moves this effect to different locations in the picture. It can be taken from Fig. 5 that the two layers of the multilayer film are clearly and sharply separated from each other indicating that essentially no mixing occured in the precursor multilayer film at the interface between the polyurethane and the pressure-sensitive adhesive layer.

In the microphotograph of Fig. 6 (Example 11) the bottom layer of the multilayer film is the cured pressure-sensitive adhesive layer whereas the top layer is the cured polyurethane layer. The clear layer of pressure-sensitive adhesive appears slightly cloudy because of the brittle behaviour of the polymer during the cryo fracture resulting in a glassy fracture pattern on the surface of the cross section. The top polyurethane layer appears slightly yellowish due to the yellow dye added to it with a small dark stripe at the top of the layer. Such stripe results from the portion of the multilayer sample extending behind the plane of the cross-sectional; such portion can be seen because the multilayer film is slightly bent in CD.

It can be taken from Fig. 6 that the two layers of the multilayer film are clearly and sharply separated from each other indicating that essentially no mixing occured in the precursor multilayer film at the interface between the polyurethane and the pressure-sensitive adhesive layer.

The thickness values of the cured polymer layers of the multilayer film are reported in Table 3 below.

**Table 3**

| Example | Downstream Speed [m/min] | Coating Station I | | | Coating Station II | | | Multilayer film | |
|---|---|---|---|---|---|---|---|---|---|
| | | Liquid Precursor | Downstream width of coating chamber [mm] | Gap [μm] | Liquid Precursor | Downstream width of coating chamber [mm] | Gap [μm] | Thickness of bottom layer [μm] | Thickness of top layer [μm] |
| 5 | 0.75 | I | rolling bead | 200 | IV | 10 | 300 | 130 | 53 |
| 6 | 1.5 | I | rolling bead | 200 | IV | 10 | 300 | 129 | 71 |
| 7 | 3 | I | rolling bead | 200 | IV | 10 | 300 | 121 | 92.5 |
| 8 | 6 | I | rolling bead | 200 | IV | 10 | 300 | 134 | 80 |
| 9 | 1.5 | III | rolling bead | 200 | IV | 10 | 300 | 122 | 71 |
| 10 | 3 | III | rolling bead | 200 | IV | 10 | 300 | 120 | 70 |
| 11 | 6 | III | rolling bead | 200 | IV | 10 | 300 | 122 | 90 |

## *Examples 12 - 13*

A coating apparatus comprising three coating stations I, II and III, respectively, as described above and schematically shown in Fig. 1 was used. Release liner Hostaphan 2SLK, 75 $\mu$m, Mitsubishi was used as a substrate, and the downstream speed was varied as is indicated in Table 4 below. The front wall, the intermediate wall and the back wall were each formed by coating knives each having a bull nose profiled bottom portion and dimensions as is described above. The width of the coating chambers in downstream direction and the gaps between the transversely extending edge of the coating knife and the surface of the substrate are indicated in Table 4 below.

Liquid precursor II or VII, respectively, was metered in front of the upstream side of the front wall as rolling bead (coating station I) and liquid precursor I or III, respectively, was filled into coating station II (the first coating chamber in downstream direction). Liquid precursor IV was filled into coating station III (the second coating chamber in downstream direction). Subsequent to the formation of the stack of the three liquid precursor layers, a release liner Hostaphan 2SLK, 75 $\mu$m, Mitsubishi was applied onto the exposed surface of the layer of liquid precursor IV via the upstream wall of the back wall coating knife. The release liner used as a substrate remained attached to the bottom layer.

The stack of the three liquid precursor layers between the two release liners was cured by passing it along the UV-curing station described in the coating apparatus above to provide a 3-layered multilayer film comprising a bottom non-tacky polyurethane layer, a middle non-tacky polyurethane layer and a top pressure-sensitive adhesive layer.

Subsequent to curing the release liners applied to the outer layers of the multilayer film were removed and the thicknesses of the cured individual layers were evaluated by taking microphotographs of cross-sections of the multilayer films. The cross-sections were obtained by freezing the samples in liquid nitrogen and breaking them (cryo fracture) and the microphotographs were taken using a light microscope (LM), Reichert Jung, Polyvar MET. Settings of equipment:

Polyvar MET:     incident/transmitted light dark/bright field
Magnification:     100x

A microphotograph of a cross-section of the multilayer film of Example 12 is shown in Fig. 7a. The microphotograph shows 3 layers of the cured multilayer film and a dark area below the film that is caused by the sample holder. The bottom layer of the multilayer film attached to the sample holder is the cured pressure-sensitive adhesive layer whereas the middle layer and the exposed top layer are cured polyurethane layers. The clear pressure-sensitive adhesive bottom layer appears streaky and slightly red in some areas due to reflections of the light passing through the red middle layer. The top clear polyurethane layer appears slightly green/yellow with a dark stripe at the top of the layer. Such stripe results from the portion of the multilayer sample extending behind the plane of the cross-sectional; such portion can be seen because the multilayer film is slightly bent in CD.

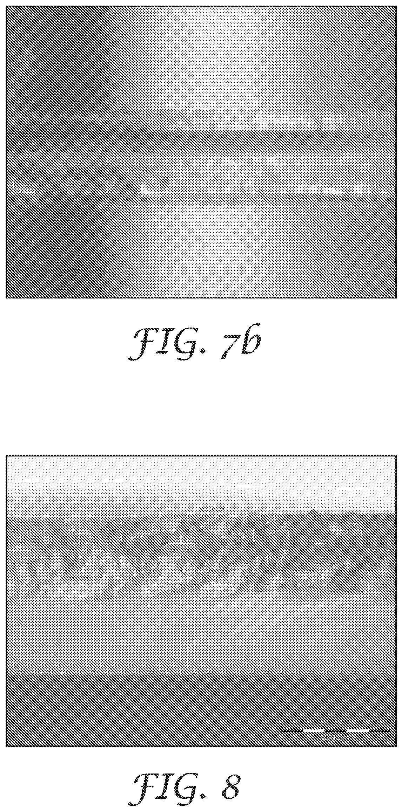

A macrophotograph of a cross-section of the multilayer film of Example 12 taken at a magnification of about 30x is shown in Fig. 7b under ambient light over a curved glossy black surface. Under these conditions top and bottom layers of the multilayer film appear clear, as stated above, and distinctly separated from the red coloured middle layer. The slightly blurrish appearance of the macrophotograph is due to a limited pixel number of the photograph taken with a Canon Poweshot SX 100 IS, obtainable from Canon Deutschland GmbH, Krefeld, Germany, using a focal length of 6 mm and a distance between lens and object of about 5 mm.

It can be taken from Fig. 7a that the three layers are clearly and sharply separated from each other indicating that essentially no mixing occurs at the interface between the two polyurethane layers as well as at the interface of the polyurethane layer and the pressure-sensitive adhesive layer. The thickness value of the cured layers is reported in Table 4 below.

A microphotograph of a cross-section of the multilayer film of Example 13 is shown in Fig. 8. The microphotograph shows 3 layers of the cured multilayer film and a dark area below the film that is caused by the sample holder. The bottom and the middle layers of the multilayer film are cured non-tacky polyurethane layers whereas the top layer is a pressure-sensitive adhesive layer. The top pressure-sensitive adhesive and the bottom polyurethane layer of the multilayer film are clear but appear slightly yellow due to reflections of the light passing through the yellow colored middle layer. Changing the direction of illumination moves this effect to different locations in the picture. It can be taken from Fig. 8 that the three layers are clearly and sharply separated from each other indicating that essentially no mixing occurs at the interface between the layers. The thickness value of the cured layers is reported in Table 4 below.

## *Examples 14 - 18*

Hostaphan 2SLK, 75 $\mu$m, Mitsubishi was used as a substrate, and the downstream speed was varied as is indicated in Table 4 below. The front wall, the intermediate wall or walls, respectively, and the back wall were each formed by coating knives each having a bull nose profiled bottom portion and dimensions as is described above. The width of the coating chambers in downstream direction and the gaps between the transversely extending edge of the coating knife and the surface of the substrate are indicated in Table 4 below. A two-layered multilayer film was obtained in Examples 14 -17 whereas the multilayer film of Example 18 had 3 layers.

Liquid precursor I was applied at upstream coating station I (rolling bead) and liquid precursor V, VI or VIII, respectively, was filled into coating station II or III, respectively (coating chambers). Subsequent to the formation of the stack of the two liquid precursor layers, a release liner Hostaphan 2SLK, 75 $\mu$m, Mitsubishi was applied onto the exposed surface of the layer of liquid precursor III via the upstream wall of the back wall coating knife. The release liner used as a substrate remained attached to the bottom layer.

The stack of the two or three liquid precursor layers, respectively, between the two release liners was cured by passing it along the UV-curing station described in the coating apparatus above to provide the corresponding 2- or 3-layered multilayer films, respectively.

The composition of the precursor multilayer film and the total thickness of the polymer layer of the cured multilayer film are summarized in Table 4 below.

The optical properties of the multilayer films measured according to the test method specified above are summarized in Tables 5 and 6 below.

**Table 4**

| Ex. | Downstream speed [m/min] | Coating Station I | | | Coating Station II | | | Coating Station III | | | Multilayer film | | | |
|---|---|---|---|---|---|---|---|---|---|---|---|---|---|---|
| | | Liquid precursor | Downstream width of coating chamber [mm] | Gap [μm] | Liquid precursor | Downstream width of coating chamber [mm] | Gap [μm] | Liquid precursor | Downstream width of coating chamber [m] | Gap [μm] | Thickness of bottom layer [μm] | Thickness of intermediate layer [μm] | Thickness of top layer [μm] | Total thickness [μm] |
| 12 | 0.71 | II | rolling bead | 100 | I | 10 | 200 | IV | 10 | 300 | 63 | 72 | 139 | 274 |
| 13 | 1.5 | VII | rolling bead | 80 | III | 10 | 300 | IV | 10 | 400 | 20 | 121 | 152 | 293 |
| 14) | 1.5 | I | rolling bead | 250 | VI | 10 | 300 | - | - | - | | | | 210 |
| 15 | 1.5 | I | rolling bead | 300 | VI | 10 | 300 | - | - | - | | | | |
| 16 | 1.5 | I | rolling bead | 300 | V | 10 | 300 | - | - | - | | | | 220 |
| 17 | 0.71 | I | rolling bead | 300 | V | 10 | 300 | - | - | - | | | | 210 |
| 18 | 1.5 | I | rolling bead | 250 | VIII | 10 | 300 | VI | | 300 | | | | 200 |

**Table 5: Haze, transmission loss and colour shift**

| Example | Y | x | y | Haze | Transmission loss | Colour shift dx | Colour shift dy |
|---|---|---|---|---|---|---|---|
| 14 | 90.2 | 0.3131 | 0.3302 | 1.88 | 0.6 % | 0.0005 | 0.0004 |
| 15 | 90.27 | 0.3132 | 0.3302 | 2 | 0.6 % | 0.0006 | 0.0004 |
| 16 | 90.5 | 0.3131 | 0.3302 | 1.05 | 0.3 % | 0.0005 | 0.0004 |
| 17 | 90.41 | 0.313 | 0.3302 | 1.19 | 0.4 % | 0.0004 | 0.0004 |
| 18 | 90.93 | 0.3129 | 0.3301 | 1.04 | -0.2 % | 0.0003 | 0.0003 |
| glass ref. | 90.77 | 0.3126 | 0.3298 | 0.56 | 0.0 % | 0 | 0 |

**Table 6: Reflection**

| Example | Y |
|---|---|
|  |  |
| 14 | 7.69 |
| 15 | 7.66 |
| 16 | 7.9 |
| 17 | 7.96 |
| 18 | 7.61 |
| glass ref. | 8 |

### *Examples 19 - 21*

A coating apparatus comprising two coating stations I and II as described above and schematically shown in Fig. 1 was used. Release liner Hostaphan 2SLK, 75 $\mu$m, Mitsubishi was used as a substrate, and the downstream speed was set as is indicated in Table 7 below. The front wall and the back wall were each formed by coating knives each having a bull nose profiled bottom portion and dimensions as is described above. The width of the coating chamber in downstream direction and the gaps between the bottom portion of the coating knives and the surface of the substrate are indicated in Table 7 below.

Liquid precursors I, X or XI, respectively, were metered in front of the upstream side of the front wall as rolling bead (coating station I) and liquid precursors IV or IX, respectively, were filled into coating station II (coating chamber). Subsequent to the formation of the stack of the two liquid precursor layers, a release liner Hostaphan 2SLK, 75 $\mu$m, Mitsubishi was applied onto the exposed surface of the top layer of liquid precursor IV or IX, respectively via the upstream wall of the back wall coating knife. The release liner used as a substrate remained attached to the bottom layer.

The stack of the two liquid precursor layers between the two release liners was cured by passing it along the UV-curing station described in the coating apparatus above to provide the multilayer film comprising a bottom exposed polyurethane layer and a top pressure-sensitive adhesive layer attached to the substrate formed by release layer Hostaphan 2SLK, 75 $\mu$m, Mitsubishi.

Subsequent to curing, the two release liners were removed and the total thickness of the cured polyurethane and pressure-sensitive adhesive dual layer film construction was measured.

The mechanical robustness of the top polyurethane layer of the multilayer films was evaluated by measuring the abrasion and scratch resistance as is described in the test section above. The results of the two tests described are summarized in Table 8.

Table 7

| Example | Downstream Speed [m/min] | Coating Station I | | | Coating station II | | | Multilayer film | | |
|---|---|---|---|---|---|---|---|---|---|---|
| | | Liquid Precursor | Downstream width of coating chamber [mm] | Gap [μm] | Liquid Precursor | Downstream width of coating chamber [m] | Gap [μm] | Thickness of bottom layer [μm] | Thickness of top layer [μm] | Total thickness [μm] |
| 19 | 0.71 | I | rolling bead | 350 | IX | 10 | 450 | N/A | N/A | 280 |
| 20 | 0.71 | X | rolling bead | 350 | IX | 10 | 450 | N/A | N/A | 280 |
| 21 | 0.71 | XI | rolling bead | 350 | IV | 10 | 450 | N/A | N/A | 280 |

**Table 8**

| Example | Number of abrasive cycles tolerated without surface damage | Maximum pencil hardness (Ericson test) |
|---|---|---|
| 19 | ≈ 500 | 9H |
| 20 | ≈ 600 | 9H |
| 21 | ≈ 700 | 9H |

**_Example 22 and Comparative Example 1a - 1c_**

A coating apparatus comprising two coating stations I and II as described above and schematically shown in Fig. 1 was used. Release liner Hostaphan 2SLK, 75 μm, Mitsubishi was used as a substrate, and the downstream speed was set as is indicated in table 9 below. The front wall and the back wall were each formed by coating knives each having a bull nose profiled bottom portion and dimensions as is described above. The width of the coating chamber in downstream direction and the gaps between the transversely extending edge of the coating knives and the surface of the substrate are indicated in table 9 below.

Liquid precursor X was metered in front of the upstream side of the front wall as rolling bead (coating station I) and liquid precursor XII was filled into coating station II (coating chamber). Subsequent to the formation of the stack of the two liquid precursor layers, a release liner Hostaphan 2SLK, 75 μm, Mitsubishi was applied onto the exposed surface of the top layer of liquid precursor XII via the upstream wall of the back wall coating knife. The release liner used as a substrate remained attached to the bottom layer.

The stack of the two liquid precursor layers between the two release liners was cured by passing it along the UV-curing station described in the coating apparatus above to provide the multilayer film comprising a polyurethane layer and a pressure-sensitive adhesive layer.

Subsequent to curing, the release liners were removed and the thicknesses of the cured polyurethane and pressure-sensitive adhesive layers, respectively, were evaluated by microscopic evaluation of cross-sections of the multilayer films. The cross-sections were obtained by cutting the samples with sharp razorblades and the measuring of the thickness listed in Table 9 was realized by using a light microscope (LM), Reichert Jung, Polyvar MET. Settings of equipment:

Polyvar MET:    incident/transmitted light dark/bright field
Magnification:    100x

**Table 9**

| Example | Downstream Speed [m/min] | Coating Chamber I | | | Coating chamber II | | | Multilayer film | | |
|---|---|---|---|---|---|---|---|---|---|---|
| | | Liquid Precursor | Downstream width of coating chamber [mm] | Gap [µm] | Liquid Precursor | Downstream width of coating chamber [mm] | Gap [µm] | Thickness of bottom layer [µm] | Thickness of top layer [µm] | Total thickness [µm] |
| 22 | 0.71 | X | rolling bead | 380 | XII | 10 | 420 | 270 | 70 | 340 |

The optical qualities of the multilayer film of Example 22 were compared with the following flexible and conformable 2-layer films comprising a polyurethane or polyethylene layer, and an opposite pressure-sensitive adhesive layer. The comparative films are commercially available as follows:

- PUL 2006 3M™ High Performance Protective polyurethane film, commercially available from 3M (Comparative Example 1 a)
- PU 5892 GA7 3M™ High Performance Protective polyurethane film, commercially available from 3M (Comparative Example 1 b)
- P-450 3M™ High Performance Protective polyethylene film, commercially available from 3M (Comparative Example 1 c)

The optical quality of the films was determined using the Shack-Hartmann wavefront sensor system and the Siemens Star based test method as described above. The good optical quality and low image distortion of the flexible film of Example 22 could be seen from the results listed in Table 10. The peak-to-valley values of the wavefront deformation summarize the deformation of the wavefront induced by the protective films and the deformation induced by the glass where the film is laminated on. The reference measurement of the glass without protective film shows that the influence of the glass plate on the deformation of the wavefront is very small compared to the influence of the protective film. The peak-to-valey value of the wavefront deformation measured for the float glass plate is substracted from the peak-to-valley value of the wavefront deformation measured for the multilayer film applied to the glass reference plate to provide the peak-to-valley value of the wavefront deformation for the multilayer film alone.

Figs. 9b - 9e show pictures of the Siemens Star test for the individual films. The Siemens star test for a glass reference is shown in Fig. 9a. The glass reference was a 2 mm thick clear float glass plate (calcium carbonate natron silicate float glass) having a refractive index $n_{589\ nm,\ 23\ °C}$ of approximately 1.52.

**Table 10**

| Film tested | Peak-to-valley wavefront [in $\lambda$ = 635 nm] | Range of peak-to-valley wavefront [in $\lambda$ = 635 nm] | Siemens Star | Resolving power r [lp/mm] | Range of r [lp/mm] |
|---|---|---|---|---|---|
| Example 22 | 2.93 *) | 0.77 | Fig. 9b | 2.9 | 0.0 |
| Comp. Ex. 1a | > 10 **) | - | Fig. 9c | 1.2 | 0.0 |
| Comp. Ex. 1b | > 43 **) | - | Fig. 9d | 1.0 | 0.2 |
| Comp. Ex. 1c | (evaluation not possible due to very strong wavefront deformation) | - | Fig. 9e | 0.6 | 0.0 |
| Glass reference | 0.20 | 0.01 | Fig. 9a | 3.0 | 0.3 |
| *) **peak-to-valley value for glass reference subtracted** **\n **\*\*) peak-to-valley value for glass reference not subtracted | | | | | |

*) **peak-to-valley value for glass reference subtracted**
**) peak-to-valley value for glass reference not subtracted

### *Example 23*

A coating apparatus comprising two coating stations I and II as described above and schematically shown in Fig. 1 was used. Release liner Hostaphan 2SLK, 75 μm, Mitsubishi was used as a substrate, and the downstream speed was set as is indicated in Table 11 below. The front wall and the back wall were each formed by coating knives each having a bull nose profiled bottom portion and dimensions as is described above. The width of the coating chamber in downstream direction and the gaps between the bottom portion of the coating knives and the surface of the substrate are indicated in Table 11 below.

Liquid precursor X was metered in front of the upstream side of the front wall as rolling bead (coating station I) and liquid precursor XIII was filled into coating station II (coating chamber). Subsequent to the formation of the stack of the two liquid precursor layers, a release liner Hostaphan 2SLK, 75 μm, Mitsubishi was applied onto the exposed surface of the top layer of liquid precursor XIII via the upstream wall of the back wall coating knife. The release liner used as a substrate remained attached to the bottom layer.

The stack of the two liquid precursor layers between the two release liners was cured by passing it along the UV-curing station described in the coating apparatus above to provide the multilayer film comprising a polyurethane layer and an opposite pressure-sensitive adhesive layer.

### *Example 24*

A coating apparatus comprising two coating stations I and II as described above and schematically shown in Fig. 1 was used with the modification that a release liner 15 was applied downstream to the coating apparatus 1 via downstream bar 30 having a comma shape with a diameter of 45 mm. The open face distance 31 between the downstream surface of the back wall 12 and the upstream surface of comma bar 30 was 200 mm. The modified coating apparatus used in Comparative Example 2a is shown in Fig. 10.

Release liner Hostaphan 2SLK, 75 $\mu$m, Mitsubishi was used as a substrate 2, and the downstream speed in downstream direction 3 was set as is indicated in Table 11 below. The front wall 11 and the back wall 12 were each formed by coating knives each having a bull nose profiled bottom portion and dimensions as is described above. The width of the coating station II (coating chamber) in the downstream direction and the gaps between the bottom portion of the coating knives and the surface of the substrate are indicated in Table 11 below.

Liquid precursor X was metered in front of the upstream side of the front wall as rolling bead I and liquid precursor XIII was filled into the coating chamber (coating station II).

Subsequent to the formation of the stack of the two liquid precursor layers and after the exit of this stack of layers from the coating apparatus, a release liner Hostaphan 2SLK, 75 $\mu$m, Mitsubishi was applied onto the exposed surface of the top layer of liquid precursor XIII via bar 30. The gap between the transversely extending edge of the bar and the exposed surface of layer XIII was initially set so that a rolling bead was formed upstream to the bar. The width of the gap was then adjusted by increasing it to a value where the rolling bead just disappeared. This gap width was used to apply the release liner. The release liner used as a substrate remained attached to the bottom layer.

The stack of the two liquid precursor layers between the two release liners was cured by passing it along the UV-curing station described in the coating apparatus above to provide the multilayer film comprising a polyurethane layer and a pressure-sensitive adhesive layer.

### *Comparative Example 2a*

A 260 $\mu$m thick single non-sticky polyurethane layer was obtained by using the coating apparatus of Fig. 1 comprising in this case only one coating knife. Liquid precursor X was metered in front of the upstream side of such single coating knife as a rolling bead (coating station I). Release liner Hostaphan 2 SLK, 75 $\mu$m, Mitsubishi was used as a substrate. The downstream speed in the downstream direction 3 and the gap between the transversely extending edge of the coating knife and the surface of the substrate were set as is indicated in table 12 below.

Subsequent to the formation of the precursor layer X a release liner Hostaphan 2 SLK, 75 $\mu$m, Mitsubishi was applied onto the exposed surface of the layer via the upstream surface of the coating knife. The release liner used as a substrate remained attached to precursor layer X. The precursor layer X was then cured by passing it along the UV-curing station described in the coating apparatus above to provide a cured 260 $\mu$m thick single non-sticky polyurethane layer X between two Hostaphan release liners. The refractive index of precursor layer X was $n_{589\ nm,\ 23\ °C}$ = 1.5030.

Then one of the release liners was removed. The cured layer of precursor X was attached via the remaining release liner to the bottom liner of the coating apparatus to coat the cured layer of precursor X with a pressure sensitive adhesive layer of precursor XIII in a second pass. Liquid precursor XIII was metered in front of the upstream side of such single coating knife as a rolling bead. The downstream speed in the downstream direction 3 and the gap between the transversely extending gap of the coating knife and the exposed surface of cured layer X were set as is indicated in table 12 below.

Subsequent to the formation of precursor layer XIII, a release liner Hostaphan 2 SLK, 75 $\mu$m, Mitsubishi was applied onto the exposed surface of precursor layer XIII via the upstream surface of the coating knife. The stack of layers between the two release liners comprising cured layer X bearing precursor layer XIII was passed along the UV-curing station described above.

### *Comparative Example 2b*

A single cured pressure-sensitive adhesive layer XIII was obtained using the coating apparatus described in Comparative Example 2(b) above. The coating gap and the thickness of the cured single layer film XIII are summarized in Table 12 below. The refractive index of precursor layer XIII was $n_{589\ nm,\ 23\ °C}$ = 1.4734.

One release liner was removed from the cured single layer pressure-sensitive adhesive film XIII and the non-sticky cured single layer polyurethane film X obtained in Comparative Example 2(b) above were laminated against each other by passing over the stack of layers with a hard roller with a width of 200 mm and a mass of 2 kg at a speed of approximately 10 mm/s in a forward and backward direction each.

The optical properties of the multilayer films of Examples 23 and 24 and of Comparative Examples 2a and 2b were evaluated using the measurement methods disclosed above. The results are listed in tables 13a and 13b. The Siemens Star photographs are shown as Figs. 9f - 9i. The surface of the cured top layer of the multilayer film of Example 24 exhibited macroscopic coating defects (bubbles with a diameter of approximately 1 mm) whereas the surface of the cured top layer of the multilayer film of Example 23 was essentially free of macroscopic coating defects.

Table 11

| Example Film | Downstream Speed [m/min] | Substrate | Coating station I | | | Coating station II | | | Multilayer film | | |
|---|---|---|---|---|---|---|---|---|---|---|---|
| | | | Liquid Precursor | Downstream width of coating chamber [mm] | Gap [$\mu$m] | Liquid Precursor | Downstream width of coating chamber [mm] | Gap [$\mu$m] | Thickness of bottom layer [$\mu$m] | Thickness of top layer [$\mu$m] | Total thickness [$\mu$m] |
| 23 | 0.71 | | X | rolling bead | 320 | XIII | 10 | 420 | | | 320 |
| 24 | 0.71 | | X | rolling bead | 320 | XIII | 10 | 500 | | | 330 |

Table 12

| Example Film | Downstream Speed [m/min] | Substrate | Coating station I | | | Coating station II | | | Multilayer film | | |
|---|---|---|---|---|---|---|---|---|---|---|---|
| | | | Liquid Precursor | Downstream width of coating chamber [mm] | Gap [$\mu$m] | Liquid Precursor | Downstream width of coating chamber [mm] | Gap [$\mu$m] | Thickness of bottom layer [$\mu$m] | Thickness of top layer [$\mu$m] | Total thickness [$\mu$m] |
| Single layer of precursor X | 0.71 | | X | rolling bead | 220 | | | | 260 | - | 260 |
| Single layer of precursor XIII | 0.71 | | XIII | rolling bead | 90 | | | | 70 | - | 70 |
| Comp. 2 a | 0.71 | Cured single layer of precursor X | XIII | rolling bead | 420 | | | | | | 330 |

**Table 13a**

| Film tested | Peak-to-valley wavefront [in $\lambda$ = 635 nm] | Siemens Star | Resolving power r [lp/mm] | Range of r [lp/mm] |
|---|---|---|---|---|
| Example 23 | 3.13 *) | Fig. 9f | 2.5 | 0.6 |
| Example 24 | 4.18 *) | Fig. 9g | 1.9 | 0.1 |
| Comp. Ex. 2a | 7.03 *) | Fig. 9h | 2.7 | 0.2 |
| Comp. Ex. 2b | 8.86 *) | Fig. 9i | 2.3 | 1.0 |
| *) peak-to-valley value for glass reference subtracted | | | | |

**Table 13b**

| Film | Thickness [mm] | Transmission T [%] | Reflection R [%] | T+R [%] | Absorption [%] | Reflection without specular [%] | Haze | Clarity |
|---|---|---|---|---|---|---|---|---|
| Example 23 | 0.32 | 90.74 | 7.68 | 98.42 | 1.58 | 0.5 | 1.94 | 94.9 |
| Example 24 | 0.33 | 90.34 | 8.02 | 98.36 | 1.64 | 0.47 | 2.08 | 94.7 |
| Comp. Ex. 2a | 0.34 | 90.14 | 8.04 | 98.18 | 1.82 | 0.51 | 2.22 | 94.9 |
| Comp. Ex. 2b | 0.33 | 90.04 | 8.05 | 98.09 | 1.91 | 0.46 | 2.43 | 94.7 |

## *Example 25 And Comparative Example 3*

A coating apparatus comprising two coating stations I and II as described above and schematically shown in Fig. 1 was used. Release liner Hostaphan 2SLK, 75 $\mu$m, Mitsubishi was used as a substrate, and the downstream speed was set as is indicated in Table 14 below. The front wall and the back wall were each formed by coating knives each having a bull nose profiled bottom portion and dimensions as is described above. The width of the coating chamber in downstream direction and the gaps between the bottom portion of the coating knives and the surface of the substrate are indicated in Table 14 below.

Liquid precursor X was metered in front of the upstream side of the front wall as a rolling bead (coating station I) and liquid precursor XIII was filled into coating station II (coating chamber). Subsequent to the formation of the stack of the two liquid precursor layers, a release liner Hostaphan 2SLK, 75 $\mu$m, Mitsubishi was applied onto the exposed surface of the top layer of liquid precursor XIII via the upstream wall of the back wall coating knife. The release liner used as a substrate remained attached to the bottom layer.

The stack of the two liquid precursor layers between the two liners was cured by passing it along the UV-curing station described in the coating apparatus above to provide the corresponding multilayer film comprising a polyurethane layer and pressure-sensitive adhesive layer.

Subsequent to curing, the release liner applied to the bottom urethane layer was removed and the thicknesses of the cured polyurethane and pressure-sensitive adhesive layers, respectively, were evaluated by microscopy of cross-sections of the multilayer films. The cross-sections were obtained by cutting the samples with sharp razorblades and the measuring of the thickness listed in Table 14 was realized by using a light microscope (LM), Reichert Jung, Polyvar MET. Settings of equipment:

Polyvar MET:    incident/transmitted light dark/bright field
Magnification:    100x

The T-peel strength and 90° peel adhesion to glass was evaluated according to the test method described above and the result is reported in Table 16 below.

## *Comparative Example 3*

A 270 $\mu$m thick single non-sticky polyurethane layer and a 70 $\mu$m thick single pressure-sensitive adhesive layer were obtained by curing precursors X and XIII, respectively, each between two liners using the curing conditions as disclosed in the section "coating apparatus" above.

The thicknesses of the single layer adhesive films were as summarized in Table 15 below.

One release liner was removed each from the single layer pressure-sensitive adhesive film and the non-sticky polyurethane film, respectively, and these were then laminated against each other by passing over the stack of layers with a hard roller with a width of 200 mm and a mass of 2 kg at a speed of approximately 10 mm/s in a forward and backward direction each.

The T-peel strength and 90° peel adhesion to glass was evaluated according to the test method described above and the result is reported in Table 16 below.

Table 14

| Example | Downstream Speed [m/min] | Coating Station I | | | Coating Station II | | | Multilayer film | | |
|---|---|---|---|---|---|---|---|---|---|---|
| | | Liquid Precursor | Downstream width of coating chamber [mm] | Gap [μm] | Liquid Precursor | Downstream width of coating chamber [mm] | Gap [μm] | Thickness of bottom layer [μm] | Thickness of top layer [μm] | Total thickness [μm] |
| 25 | 0,71 | X | rolling bead | 320-330 | XIII | 10 | 420 | 270 | 70 | 340 |

**Table 15**

|  | Laminated protective film | Thickness of polyurethane layer [μm] | Thickness of pressure-sensitive adhesive layer [μm] | Total thickness [μm] |
|---|---|---|---|---|
| Comp. Ex. 3 | Laminated two-layer protective film (non-primed) | 270 | 70 | 340 |

**Table 16**

| Example | T-peel strength [N] | Failure mode observed wth T-peel measurements | 90° peel strength [N] |
|---|---|---|---|
| 25 | > 6.38 | Pop-off from substrate | 6.6 |
| Comp. Ex. 3 | 3.50 | Delamination failure at interface | 6.2 |

**List Of Reference Numbers**

| | |
|---|---|
| 1 | coating apparatus |
| 2 | substrate |
| 3 | downstream direction |
| 10 | precursor of multilayer film |
| 11 | front wall |
| 12 | back wall |
| 13 | intermediate wall |
| 14 | solid film |
| 15 | release film |
| 16 | coating chamber |
| 17 | rolling bead |
| I - IV | consecutive numbering of coating stations starting from the rolling bead (if present) as the most upstream coating station with the following coating chambers numbered in downstream direction |
| 18 | bottom portion of coating knife |
| 19a | upstream surface of coating knife |
| 19b | downstream surface of coating knife |
| 20 | cured multilayer film |
| 30 | downstream bar or roller |
| 31 | open face distance |
| 100 | gap |
| 101 | width of a coating chamber |
| 200 | wavefront sensor system |
| 201 | fiber coupled layer diode |
| 202 | spherical wavefront |
| 203 | aspheric collimation lens |
| 204 | plane wavefront |
| 205 | glass plate |
| 206 | deformed wavefront |
| 207 | Kepler telescope |
| 210 | Shack-Hartmann sensor device |

**Claims**

1. Continuous self-metered process of forming a multilayer film comprising at least two superimposed polymer layers comprising the steps of:

(i) providing a substrate;
(ii) providing two or more coating knives which are offset, independently from each other, from said substrate to form a gap normal to the surface of the su bstrate;
(iii) moving the substrate relative to the coating knives in a downstream direction,
(iv) providing curable liquid precursors of the polymers to the upstream side of the coating knives thereby coating the two or more precursors through the respective gaps as superimposed layers onto the substrate; and
(v) curing the precursor of the multilayer film thus obtained;

wherein a lower layer of a curable liquid precursor is covered by an adjacent upper layer of a curable liquid precursor or a film, respectively, without exposing said lower layer of a curable liquid precursor.

2. Process according to claim 1, which further comprises the step of providing one or more solid films and applying these simultaneously with the formation of the adjacent lower polymer layer.

3. Process according to claim 2 wherein a release liner is attached to the exposed surface of the top layer of the precursor of the multilayer film simultaneously with the formation of such top layer.

4. Process according to any of claims 1 - 2 wherein the liquid precursors are applied under ambient pressure or an over-pressure.

5. Process according to any of claims 1 - 3 wherein the liquid precursors of the polymer material are provided in one or more coating chambers abutting each other and being bordered in downstream direction by a front wall, optionally one or more intermediate walls and a back wall, and, optionally, by a rolling bead positioned up-web relative to the front wall.

6. Process according to claim 4 wherein the upstream intermediate walls, the back wall and, if a rolling bead is present upstream relative to the front wall, the front wall are formed by coating knives.

7. Process according to any of the preceding claims wherein the speed of substrate in MD with respect to the coating apparatus is between 0.05 and 100 m/min.

8. Process according to any of the preceding claims wherein the liquid precursors have a Brookfield viscosity of at least 1,000 mPas at 25 °C.

9. Multilayer film obtainable by the method of claim 2 wherein a release liner is attached to the exposed surface of the top layer of the precursor of the multilayer film simultaneously with the formation of such top layer.

10. Light-transmissive multilayer film according to claim 9 comprising at least two superimposed polymer layers each having a transmission of at least 80% relative to visible light wherein the multilayer film exhibits a transmission relative to visible light which is higher than the transmission of a multilayer film obtained by a method differing from the above method in that the release liner is attached to the exposed surface of the top layer surface at a position downstream to the formation of the top layer of the precursor of the multilayer film.

11. Light-transmissive multilayer film according to claim 10 wherein the ratio of the transmission of the multilayer film over the transmission of the comparative multilayer film is at least 1.002.

12. Light-transmissive multilayer film according to any of claim 10 or 11 comprising: at least two superimposed polymer layers wherein one of the outer layers comprises a polyurethane polymer obtainable from the polymerization of a liquid precursor comprising at least one ethylenically unsaturated urethane compound and wherein the other opposite outer layer comprises an adhesive, the multilayer film having a maximum wave-front aberration of a wavefront resulting from a planar wavefront of a wavelength of $\lambda = 635$ nm impinging normally on the outer layer opposite to the adhesive outer layer and transmitted through the multilayer film, measured as the peak-to-valley value of the transmitted wavefront, of less than 6 $\lambda$ (= 3,810 nm).

13. Light-transmissive multilayer film according to claim 12 wherein the ethylenically unsaturated polyurethane compound is a (meth)acrylate urethane compound.

**Patentansprüche**

1. Fortlaufendes selbstmessendes Verfahren zum Bilden einer Mehrschichtfolie mit zumindest zwei überlagerten Polymerschichten, das die folgenden Schritte umfasst:

   (i) Bereitstellen eines Substrats;
   (ii) Bereitstellen von zwei oder mehr Beschichtungsmessern, die unabhängig voneinander von dem besagten Substrat versetzt sind, um einen Freiraum normal zur Oberfläche des Substrats zu bilden;
   (iii) Bewegen des Substrats relativ zu den Beschichtungsmessern in einer stromabwärtigen Richtung,
   (iv) Bereitstellen von härtbaren flüssigen Vorläufern der Polymere zur stromaufwärtigen Seite der Beschichtungsmesser, wodurch die zwei oder mehr Vorläufer durch die jeweiligen Freiräume als überlagerte Schichten auf das Substrat beschichtet werden; und
   (v) Aushärten des Vorläufers der dadurch erhaltenen Mehrschichtfolie;

   wobei eine untere Schicht eines härtbaren flüssigen Vorläufers jeweils durch eine angrenzende obere Schicht eines härtbaren flüssigen Vorläufers oder eine Folie bedeckt ist, ohne die besagte untere Schicht eines härtbaren flüssigen Vorläufers zu exponieren.

2. Verfahren nach Anspruch 1, ferner umfassend den Schritt zum Bereitstellen von einer oder mehr festen Folien und ihr gleichzeitiges Anwenden mit der Bildung der angrenzenden unteren Polymerschicht.

3. Verfahren nach Anspruch 2, wobei eine Trennschicht an der exponierten Oberfläche der obersten Schicht des Vorläufers der Mehrschichtfolie gleichzeitig mit der Bildung einer solchen obersten Schicht angebracht ist.

4. Verfahren nach einem der Ansprüche 1 - 2, wobei die flüssigen Vorläufer unter Umgebungsdruck oder einem Überdruck angebracht werden.

5. Verfahren nach einem der Ansprüche 1 - 3, wobei die flüssigen Vorläufer des Polymermaterials in einer oder mehr Beschichtungskammern bereitgestellt sind, die aneinander anliegen und in stromabwärtiger Richtung durch eine Vorderwand, optional eine oder mehr Zwischenwände und eine Rückwand, und optional durch ein Rollkorn, das relativ zur Vorderwand bahnaufwärts positioniert ist, begrenzt sind.

6. Verfahren nach Anspruch 4, wobei die stromaufwärtigen Zwischenwände, die Rückwand und wenn ein Rollkorn stromaufwärts relativ zur Vorderwand vorhanden ist, die Vorderwand durch Beschichtungsmesser gebildet werden.

7. Verfahren nach einem der vorstehenden Ansprüche, wobei die Geschwindigkeit des Substrats in MD in Bezug auf die Beschichtungsvorrichtung zwischen 0,05 und 100 m/Min. liegt.

8. Verfahren nach einem der vorstehenden Ansprüche, wobei die flüssigen Vorläufer eine Brookfield-Viskosität von zumindest 1,000 mPas bei 25 °C aufweisen.

9. Durch Verfahren nach Anspruch 2 herstellbare Mehrschichtfolie, wobei eine Trennschicht an der exponierten Oberfläche der obersten Schicht des Vorläufers der Mehrschichtfolie gleichzeitig mit der Bildung einer solchen obersten Schicht angebracht ist.

10. Lichtdurchlässige Mehrschichtfolie nach Anspruch 9, die zumindest zwei überlagerte Polymerschichten umfasst, wobei jede eine Übertragung von zumindest 80 % relativ zum sichtbaren Licht hat, wobei die Mehrschichtfolie eine Übertragung relativ zum sichtbaren Licht aufweist, die höher als die Übertragung einer Mehrschichtfolie ist, die durch ein Verfahren erzeugt wird, das vom oben angeführten Verfahren insofern abweicht, als dass die Trennschicht an der exponierten Oberfläche der Oberfläche der obersten Schicht an einer Position stromabwärts zur Bildung der obersten Schicht des Vorläufers der Mehrschichtfolie angebracht ist.

11. Lichtdurchlässige Mehrschichtfolie nach Anspruch 10, wobei das Verhältnis der Übertragung der Mehrschichtfolie zumindest 1,002 über der Übertragung der vergleichbaren Mehrschichtfolie liegt.

12. Lichtdurchlässige Mehrschichtfolie nach einem der Ansprüche 10 oder 11, die Folgendes umfasst: zumindest zwei überlagerte Polymerschichten, wobei eine der Außenschichten ein Polyurethanpolymer umfasst, das durch die Polymerisation eines flüssigen Vorläufers hergestellt wird, der zumindest eine ethylenisch ungesättigte Urethanverbindung umfasst und wobei die andere gegenüberliegende Außenschicht einen Kleber umfasst, wobei die Mehrschichtfolie eine maximale Wellenfrontaberration einer Wellenfront hat, die aus einer planaren Wellenfront mit einer Wellenlänge von λ = 635 nm, die normal auf die Außenschicht, die der Kleberaußenschicht gegenüberliegt, auftrifft und durch die Mehrschichtfolie übertragen wird, was als der Maximal-Minimal-Wert der übertragenen Wellenlänge berechnet wird, von weniger als 6 λ (= 3,810 nm) hervorgeht.

13. Lichtdurchlässige Mehrschichtfolie nach Anspruch 12, wobei die ethylenisch ungesättigte Polyurethanverbindung eine (Meth)-Urethanacrylatverbindung ist.

**Revendications**

1. L'invention concerne un procédé continu à dosage automatique pour former un film multicouche composé d'au moins deux couches polymères superposées, comprenant les étapes qui consistent à :

(i) utiliser un substrat ;
(ii) utiliser au moins deux lames d'enduction qui sont décalées, indépendamment l'une de l'autre, par rapport au substrat pour former un espace perpendiculaire à la surface du substrat ;
(iii) déplacer le substrat par rapport aux lames d'enduction dans une direction aval,
(iv) utiliser des précurseurs de polymère liquides durcissables sur le côté amont des lames d'enduction, ce qui permet de revêtir les deux précurseurs ou plus via les espaces respectifs en tant que couches superposées sur le substrat ; et
(v) durcir le précurseur du film multicouche ainsi obtenu ;

une couche inférieure de précurseur liquide durcissable étant recouverte respectivement d'une couche supérieure adjacente de précurseur liquide durcissable ou d'un film, sans exposer ladite couche inférieure du précurseur liquide durcissable.

2. Procédé selon la revendication 1, qui comprend en outre l'étape consistant à utiliser un ou plusieurs films solides et à appliquer ces derniers simultanément à la formation de la couche de polymère inférieure adjacente.

3. Procédé selon la revendication 2, dans lequel une protection détachable est fixée à la surface exposée de la couche supérieure du précurseur du film multicouche simultanément à la formation de cette couche supérieure.

4. Procédé selon l'une quelconque des revendications 1 à 2, dans lequel les précurseurs liquides sont appliqués sous la pression ambiante ou sous une surpression.

5. Procédé selon l'une quelconque des revendications 1 à 3, dans lequel les précurseurs liquides du matériau polymère sont utilisés dans une ou plusieurs chambres d'enduction en butée l'une sur l'autre et bordées en direction aval par une paroi avant, éventuellement par une ou plusieurs parois intermédiaires et par une paroi arrière, et, éventuellement, par un bourrelet roulant positionné en amont de la bande par rapport à la paroi avant.

6. Procédé selon la revendication 4, dans lequel les parois intermédiaires amont, la paroi arrière et, si un bourrelet roulant est présent en amont de la paroi avant, la paroi avant sont formées par des couteaux d'enduction.

7. Procédé selon l'une quelconque des revendications précédentes, dans lequel la vitesse du substrat dans le sens machine par rapport à l'appareil d'enduction est comprise entre 0,05 et 100 m/min.

8. Procédé selon l'une quelconque des revendications précédentes, dans lequel les précurseurs liquides présentent une viscosité Brookfield égale ou supérieure à 1 000 mPas à 25 °C.

9. Film multicouche pouvant être obtenu par le procédé de la revendication 2, dans lequel une protection détachable est fixée à la surface exposée de la couche supérieure du précurseur du film multicouche simultanément à la formation de cette couche supérieure.

10. Film multicouche transmettant la lumière selon la revendication 9, comprenant au moins deux couches polymères superposées, chacune présentant une transmission égale ou supérieure à 80 % par rapport à la lumière visible, dans lequel le film multicouche présente une transmission par rapport à la lumière visible qui est plus élevée que la transmission d'un film multicouche obtenu par un procédé différent du procédé ci-dessus en ce sens que la protection détachable est fixée à la surface exposée de la surface de la couche supérieure à une position en aval de la formation de la couche supérieure du précurseur du film multicouche.

11. Film multicouche transmettant la lumière selon la revendication 10, dans lequel le rapport de la transmission du film multicouche à la transmission du film multicouche de comparaison est égal ou supérieur à 1,002.

12. Film multicouche transmettant la lumière selon l'une quelconque des revendications 10 ou 11, comprenant : au moins deux couches polymères superposées, dans lequel une des couches extérieures comprend un polymère polyuréthane pouvant être obtenu à partir de la polymérisation d'un précurseur liquide comprenant au moins un composé d'uréthane à insaturation éthylénique et dans lequel l'autre couche extérieure opposée comprend un adhésif, le film multicouche présentant une aberration maximale de front d'onde d'un front d'onde résultant d'un front d'onde plan d'une longueur d'onde $\lambda$ = 635 nm impactant perpendiculairement la couche extérieure opposée à la couche extérieure adhésive et transmis à travers le film multicouche, mesurée comme étant la valeur de crête à creux du front d'onde transmis, qui est inférieure à 6 $\lambda$ (= 3,810 nm).

13. Film multicouche transmettant la lumière selon la revendication 12, dans lequel le composé de polyuréthane à insaturation éthylénique est un composé uréthane (méth)acrylate.

*FIG. 1*

*FIG. 2a*

*FIG. 2b*

FIG. 3

*FIG. 4*

*FIG. 5*

*FIG. 6*

*FIG. 7a*

*FIG. 7b*

*FIG. 8*

FIG. 9a

FIG. 9b

FIG. 9c

FIG. 9d

FIG. 9e

FIG. 9f

FIG. 9g

FIG. 9h

FIG. 9i

*FIG. 10*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4818610 A, Zimmerman
- JP 2001187362 A, Takashi
- JP 2003001648 A, Takashi
- US 4894259 A, Kuller
- EP 0808220 A, Leonard
- US 5962075 A, Sartor
- US 5728430 A, Sartor
- EP 1538262 A, Morita
- DE 10130680
- EP 0974632 A1
- US 20040022954 A
- US 4143190 A
- WO 0189673 A
- US 5612092 A
- WO 2004000961 A
- WO 9216593 A
- WO 2007124263 A
- US 5506279 A

**Non-patent literature cited in the description**

- Liquid Film Coating. Chapmann & Hall, 1997, 9
- **KIRK-OTHMER et al.** Encyclopedia of Chemical Technology. 1993, vol. 6, 610
- Solvents. Paint Testing Manual. American Society for Testing and Materials
- A Three-Dimensional Approach to Solubility. *Journal of Paint Technology,* vol. 38 (496), 269-280